(19) Europäisches Patentamt
European Patent Office
Office européen des brevets

(11) EP 2 374 693 B1

(12) **EUROPEAN PATENT SPECIFICATION**

(45) Date of publication and mention of the grant of the patent:
**26.08.2015 Bulletin 2015/35**

(21) Application number: **08879195.9**

(22) Date of filing: **26.12.2008**

(51) Int Cl.:
***B62D 6/00*** (2006.01) ***B62D 5/04*** (2006.01)
***B62D 101/00*** (2006.01) ***B62D 113/00*** (2006.01)
***B62D 119/00*** (2006.01) ***B62D 5/00*** (2006.01)
***B62D 15/02*** (2006.01)

(86) International application number:
**PCT/JP2008/073829**

(87) International publication number:
**WO 2010/073400 (01.07.2010 Gazette 2010/26)**

(54) **DRIVING SUPPORT SYSTEM OF VEHICLE**

FAHRUNTERSTÜTZUNGSSYSTEM FÜR EIN FAHRZEUG

SYSTÈME D'ASSISTANCE À LA CONDUITE DE VÉHICULE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**12.10.2011 Bulletin 2011/41**

(73) Proprietor: **TOYOTA JIDOSHA KABUSHIKI KAISHA**
**Toyota-shi, Aichi-ken, 471-8571 (JP)**

(72) Inventors:
- **LIMPIBUNTERNG, Theerawat**
  **Toyota-shi,**
  **Aichi-ken, 471-8571 (JP)**
- **KOJO, Takahiro**
  **Toyota-shi,**
  **Aichi-ken, 471-8571 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(56) References cited:
**EP-A1- 1 508 500**
**EP-A1- 1 803 628**
**DE-A1-102007 004 369**
**JP-A- 2005 153 779**
**JP-A- 2005 172 528**
**JP-A- 2007 160 998**
**JP-A- 2007 302 017**
**JP-A- 2008 120 338**
**JP-A- 2008 137 612**
**JP-A- 2008 162 566**
**JP-A- 2008 174 013**
**JP-A- 2008 213 522**
**US-A1- 2008 091 321**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 374 693 B1

## Description

Technical Field

The present invention relates to a driving support apparatus, such as LKA (Lane Keeping Assist), in a vehicle provided with various steering mechanisms, such as EPS (Electronic controlled Power Steering), VGRS (Variable Gear Ratio Steering), ARS (Active Rear Steering), or SBW (Steer By Wire).

Background Art

As this type of apparatus, there has been suggested an apparatus for enabling lane keeping driving by using an electrically-assisted power steering apparatus and a steering angle varying apparatus (e.g. refer to a patent document 1). According to the steering control apparatus of a vehicle disclosed in the patent document 1 (hereinafter referred to a "conventional technology"), the vehicle can be driven well along a target driving route by controlling the electrically-assisted power steering apparatus to obtain a target rudder angle based on a curvature radius at the time of lane keeping driving and by controlling the deviation of a yaw angle and the lateral position of the vehicle with respect to a driving route.

Incidentally, there is known an apparatus for setting a target steering angle $\Delta\delta t$, on the basis of a target steering angle $\Delta\delta t1$ for making the vehicle drive along the target driving route and a target steering angle $\Delta\delta ts$ for bringing the behavior of the vehicle close into a normative state (e.g. refer to a patent document 2).

Incidentally, there is also known an apparatus for increasing a correction amount for correcting a target variable steering angle with an increase in the yaw angle (e.g. refer to a patent document 3).

Patent document 1: Japanese Patent Application Laid Open No. 2007-160998
Patent document 2: Japanese Patent Application Laid Open No. 2006-143101
Patent document 3: Japanese Patent Application Laid Open No. 2008-137612

EP 1 508 500 A1 discloses a driving support apparatus of a vehicle, the vehicle comprising: a steering torque assisting device capable of assisting a steering torque applied to a steering input shaft via a steering wheel; and a rudder angle varying device capable of varying a relation between a steering angle as a rotation angle of the steering input shaft and a rudder angle as a rotation angle of steered wheels by relatively rotating a steering output shaft coupled with the steered wheels with respect to the steering input shaft, said driving support apparatus comprising: a first setting device for setting a first control target value corresponding to one of the steering torque assisting device and the rudder angle varying device, to make the vehicle follow a target driving route; a first controlling device for controlling the one device on the basis of the set first control target value; a second setting device for setting a second control target value, corresponding to the other device of the torque assisting device and the rudder angle varying device so as to suppress a change in behavior of the vehicle caused when the vehicle is made follow the target driving route due to the control on the basis of said set first control target value of the one device; and a second controlling device for controlling the other device on the basis of the set second control target value.

Disclosure of Invention

Subject to be Solved by the Invention

When some driving force is directly or indirectly applied to steered wheels, thereby to change a rudder angle and follow the target route, a reaction force from a steering system including the steered wheels acts on a steering wheel, and in an extreme case the steering wheel is counter-steered. Moreover, in the configuration that the rudder angle can be changed by applying to the steering system an assist torque for assisting a steering torque given by a driver, the steering wheel is operated independently of the driver's will, and thus the driver can highly likely feel uncomfortable. In other words, it is generally hard to realize the following for the target route by using a single steering mechanism.

On the other hand, in the aforementioned conventional technology, a plurality of steering mechanisms are used, such as the electrically-assisted power steering apparatus and the steering angle varying apparatus; however, each of the mechanisms merely bears a part of control associated with the lane keeping. Thus, if it is tried to realize the target rudder angle based on the curvature radius by using the electrically-assisted power steering apparatus, it is hardly possible to avoid the growth of the uncomfortable feeling. Also if it is tried to control the deviation of the yaw angle and the lateral position of the vehicle by using the steering angle varying apparatus, an influence of the reaction force on the steering wheel affects to the vehicle behavior.

Incidentally, further to the growth of the uncomfortable feeling, this type of uncomfortable feeling highly likely leads to the driver's unnecessary steering operation, so that it can cause the unstable vehicle behavior. Moreover, for example, if the rudder angle per unit steering angle is increased by using the steering angle varying apparatus or the like, it is possible to correct the steering angle required to obtain the target rudder angle, relatively to the reduction side. However, if the rudder angle per unit steering angle is increased as described above, the rudder angle significantly changes with respect to the steering operation performed by the driver's will, and the robustness of the vehicle decreases, resulting in the unstable vehicle behavior. As described above, the conventional technology has such a technical problem that the vehicle behavior can be unstable when the vehicle is made to follow the target driving route.

In view of the aforementioned problems, it is therefore an object of the present invention to provide a driving support apparatus of a vehicle, capable of making the vehicle follow the target driving route without causing the unstable vehicle behavior.

Means for Solving the Subject

The above object of the present invention can be achieved by a driving support apparatus of a vehicle, the vehicle provided with: a steering torque assisting device capable of assisting a steering torque applied to a steering input shaft via a steering wheel; and a rudder angle varying device capable of varying a relation between a steering angle as a rotation angle of the steering input shaft and a rudder angle as a rotation angle of steered wheels, the driving support apparatus provided with: a first setting device for setting a first control target value corresponding to one of the steering torque assisting device and the rudder angle varying device, to make the vehicle follow a target driving route; a first controlling device for controlling the one device on the basis of the set first control target value; a second setting device for setting a second control target value corresponding to the other device so as to suppress a change in behavior of the vehicle caused when the vehicle is made follow the target driving route due to the control of the one device; and a second controlling device for controlling the other device on the basis of the set second control target value.

The vehicle is provided at least with: the steering torque assisting device; and the rudder angle varying device.

The steering torque assisting device of the present invention includes in effect a device capable of assisting the driver steering torque corresponding to an artificial steering input applied from a driver to the steering input shaft, which is directly or indirectly coupled with the steering wheel (generally referred to as a "handle"). At this time, the assisting aspect of the driver steering torque in the steering torque assisting device may be in effect arbitrary within practical limitations (under the assumption that there are such limitations) based on at least an installation space, cost, durability, reliability, or the like, regardless of a difference between directly and indirectly.

In other words, the steering torque assisting device may be constructed such that it applies an assist torque for directly assisting the steering torque to the steering input shaft, or such that it apples this type of assist torque to a steering output shaft which is directly or indirectly coupled with the steering input shaft, or such that it can apply an assist torque for assisting the rotation of a pinion gear which engages with a rack bar if the steering system adopts a steering transmission mechanism of a rack and pinion type, or such that it can apply to the rack bar a driving force for assisting the reciprocating motion of the rack bar. According to the steering torque assisting device, the steering torque is eventually applied to the steering input shaft via a physical or mechanical transmission path including various transmission mechanisms and various shaft bodies. Thus, it is possible to reduce the driver's steering load, or to hold the steering wheel instead of the driver, or to rotate the steering input shaft independently of the driver's steering operation.

On the other hand, the rudder angle varying device of the present invention includes in effect various physical, mechanical, electrical, or magnetic apparatuses capable of varying the relation between the steering angle as the rotation angle of the steering input shaft and the rudder angle as the rotation angle of the steered wheels, gradually or continuously. In other words, according to the rudder angle varying device, the relation between the steering angle and the rudder angle is not uniquely determined, and for example, a ratio between the steering angle and the rudder angle can be changed. Alternatively, the rudder angle can be changed independently of the steering angle. The rudder angle varying device may be constructed as, for example, VGRS, SBW or the like, as a preferred form.

According to the driving support apparatus of the vehicle of the present invention, in its operation, for example, the first control target value is set by the first setting device which can adopt forms of various processing units such as an ECU (Electronic Controlled Unit), and various computer systems such as various micro computer apparatuses or controllers.

The first control target value is a control target value which corresponds to one of the steering torque assisting device and the rudder angle varying device and which is to make the vehicle follow the target driving route. In setting the first control target value, various known algorithms can be applied. For example, the curvature of the target driving route, the position deviation and the yaw (angle) deviation between the vehicle and a white line or the like for defining the target driving route, and the like may be calculated or estimated on the basis of the image of the target driving route imaged by an in-vehicle camera or the like. On the basis of them, target lateral acceleration for making the vehicle follow the target driving route may be calculated or estimated. After that, on the basis of the calculated or estimated target lateral acceleration, the first control target value may be set as a target assist torque which is the target value of the assist torque to be outputted from the steering torque assisting device, or as a target rudder angle which is the target value of the amount of change in the rudder angle to be realized by the rudder angle varying device.

If the first control target value is set, the one device corresponding to the set first control target value is controlled on the basis of the set first control target value by the first controlling device which can adopt forms of various processing units such as an ECU, and various computer systems such as various micro computer apparatuses or controllers. In other words, according to the driving support apparatus of the vehicle of the present invention, one of the steering torque assisting device and the rudder angle varying device functions as a primary system (hereinafter referred to as a "main system" as occasion demands) for making the vehicle follow the target driving route.

Here, whether the steering torque assisting device is used or the rudder angle varying device is used as this type of main system, the vehicle behavior tends to be unstable in the following for the target driving route due to the growth of the uncomfortable feeling, the decrease in robustness, or the like, as described above.

Thus, according to the driving support apparatus of the vehicle of the present invention, the other device in relation to the one device is controlled cooperatively with the one device as a suppressing device for suppressing the destabilization of the vehicle behavior of this type. In other words, according to the driving support apparatus of the vehicle of the present invention, in its operation, the second control target value corresponding to the other device is set so as to suppress the change in behavior of the vehicle caused when the vehicle is made follow the target driving route due to the control of the one device, by the second setting device which can adopt forms of various processing units such as an ECU, and various computer systems such as various micro computer apparatuses or controller. Moreover, if the second control target value is set, the other device is controlled on the basis of the set second control target value by the second controlling device which can adopt forms of various processing units such as an ECU, and various computer systems such as various micro computer apparatuses or controllers.

Thus, according to the driving support apparatus of the vehicle of the present invention, even if either one of the steering torque assisting device and the rudder angle varying device is used as the main system, the change in the vehicle behavior caused in following the target driving route is relieved and ideally canceled by the control of the other device which acts as the suppressing device. In other words, it is possible to stabilize the vehicle behavior when the vehicle is made follow the target driving route.

Here, in particular, the driving support apparatus of the vehicle of the present invention is remarkably advantageous to any known technical idea in the point that the steering torque assisting device and the rudder angle varying device are mutually cooperatively operated in order to stabilize the vehicle behavior of this type. In other words, within a conventional technical idea, which does not have this type of technical idea, with or without a plurality of devices capable of controlling the rudder angle including the steering torque assisting device, an influence of the operation of one device on the vehicle behavior is not considered. Thus, even if a primary influence directly caused by the operation of the one device (e.g. the occurrence of the steering operation independent of the driver's will described above) can be suppressed (e.g. in this case, the amount of change in the rudder angle with respect to the steering angle is increased, or the like), a secondary or multilevel influence of destabilizing the vehicle behavior (e.g. the decrease in robustness of the vehicle behavior due to the increased amount of change in the rudder angle with respect to the driver's steering input) can occur. In other words, after all, the vehicle behavior cannot be improved at all.

In one aspect of the driving support apparatus of the vehicle of the present invention, the rudder angle varying device varies the relation by relatively rotating a steering output shaft coupled with the steered wheels with respect to the steering input shaft, the first setting device sets a target assist torque as the first control target value, the first controlling device controls the steering torque assisting device on the basis of the set target assist torque, the second setting device sets a steering transmission ratio for defining a rotation angle of the steering output shaft with respect to the steering angle so as to reduce the steering transmission ratio in comparison with upon non-following for the target driving route, as the second control target value, and the second controlling device controls the rudder angel varying device on the basis of the set steering transmission ratio.

According to this aspect, the rudder angle varying device can adopt a form of VGRS or the like, capable of varying the relation between the steering angle and the rudder angle by relatively rotating the steering output shaft with respect to the steering input shaft by using a driving force such as a motor torque supplied from a driving device such as a motor. According to the construction of the rudder angle varying device, the steering transmission ratio for defining the rotation angle of the steering output shaft with respect to the steering angle (i.e. the large or small magnitude of the steering transmission ratio corresponds to the large or small magnitude of the rudder angle with respect to one steering angle, respectively) can be controlled in a relatively arbitrary range.

According to this aspect, when the following for the target driving route is tried with the steering torque assisting device as the main system, the steering transmission ratio is set on the reduction side in comparison with upon the non-following for the target driving route, as at least one portion of the second control target value, by the second setting device.

In other words, according to this aspect, the degree of a change in the rotation angle of the steering output shaft (which is uniquely the rudder angle) with respect to the steering angle decreases in comparison with upon the non-following. Thus, even if the steering input (e.g. emergency avoidance, emergency operation, or the like) is given to the steering wheel by the driver for proper reasons during a period in which the vehicle is made follow the target driving route, or even if the steering input is performed independently of the driver's will due to force majeure or the like, an influence on the rudder angle is relatively relieved. In other words, it is possible to relatively stabilize the vehicle behavior.

In another aspect of the driving support apparatus of the vehicle of the present invention, the rudder angle varying device varies the relation by relatively rotating a steering output shaft coupled with the steered wheels with respect to the steering input shaft, the first setting device sets a target assist torque as the first control target value, the first controlling device controls the steering torque assisting device on the basis of the set target assist torque, the second setting device sets a target relative rotation angle of the steering output shaft with respect to the steering input shaft so as to reduce the steering angle required to make the vehicle follow the target driving route, as the second control target value, and the second controlling device controls the rudder angel varying device on the basis of the set target relative rotation angle.

According to this aspect, the rudder angle varying device can adopt a form of VGRS or the like, capable of varying the relation between the steering angle and the rudder angle by relatively rotating the steering output shaft with respect to the steering input shaft by using a driving force such as a motor torque supplied from a driving device such as a motor. According to the construction of the rudder angle varying device, the steering transmission ratio for defining the rotation angle of the steering output shaft with respect to the steering angle (i.e. the large or small magnitude of the steering transmission ratio corresponds to the large or small magnitude of the rudder angle with respect to one steering angle, respectively) can be controlled in a relatively arbitrary range. On the other hand, according to the construction of the rudder angle varying device, it is also possible to rotate the steering output shaft independently of this type of steering transmission ratio. In other words, the rudder angle can be changed even without the steering input which involves the change in the steering angle.

According to this aspect, the second setting device sets the target relative rotation angle of the steering output shaft so as to reduce the steering angle required to make the vehicle follow the target driving route, as the second control target value. Moreover, the rudder angel varying device is controlled by the second controlling device on the basis of the set target relative rotation angle. As a result, the steering output shaft is relatively rotated with respect to the steering input shaft by an amount corresponding to the target relative rotation angle.

Here, the steering output shaft is merely relatively rotated with respect to the steering input shaft, and there is no power transmission with respect to the steering input shaft when the steering output shaft is rotationally driven by the second controlling device. Therefore, according to this aspect, the change in the steering angle is suppressed in the period in which it is tried to follow the target driving route by the application of the assist torque or the like by the steering torque assisting device. In other words, if it is observed from the driver's side, such an uncomfortable feeling that the steering wheel is operated without the steering operation is preferably relieved. The relief of the uncomfortable feeling of this type suppresses the occurrence of the unnecessary steering operation by the driver because it relieves the driver's psychological burden. In other words, it is possible to result in the stable vehicle behavior.

Here, in particular, if the second setting device performs the setting of the steering transmission ratio described above (the setting on the reduction side with respect to upon the non-following) in addition to this type of target relative rotation angle as the second control target value, it is possible to reduce an influence of the driver's steering input on the change in the rudder angle while reducing the steering angle by the setting of the target relative rotation angle, which is extremely useful in practice.

In one aspect of the driving support apparatus of the vehicle of the present invention in which the target relative rotation angle is set, the second setting device sets the target relative rotation angle in accordance with a driving condition of the vehicle.

If the driving condition as a concept including a vehicle operating condition, an environmental condition, and the like is different, the relation rotation angle necessary for the steering output shaft can be also different. According to this aspect, since the target relative rotation angle is set in accordance with the driving condition of the vehicle, it is possible to dispel the concern that the relative rotation of the steering output shaft destabilizes the vehicle behavior according to circumstances. A practical aspect associated with the selection of the driving condition of this type and the setting of the target relative rotation angle according to the selection may be in effect appropriately determined so as to stabilize the vehicle behavior to some extent in comparison with cases where this type of consideration is not made at all, from a viewpoint of motion dynamics or human dynamics, on the basis of experiments, experiences, theories, or simulations or the like in advance.

Incidentally, in this aspect, the second setting device may set the target relative rotation angle so as to reduce amount of reduction in the steering angle with an increase in curvature of the target driving route.

From a viewpoint on the driver's side, it is natural that the operation amount of the steering wheel increases with an increase in the curvature of the target driving route (i.e. inverse of the virtual radius of the target driving route, meaning that the target driving route is sharply curved with an increase in the curvature), and if the vehicle turns even if the steering angle is zero, it is hard to avoid the growth of the uncomfortable feeling. As described above, by setting the target relative rotation angle in accordance with the curvature of the target driving route, it is possible to perform the following for the target driving route, highly accurately, without making the driver feel uncomfortable.

Moreover, in this aspect, the second setting device may set the target relative rotation angle so as to reduce amount of reduction in the steering angle with an increase in speed of the vehicle.

If the speed of the vehicle (hereinafter referred to as a "vehicle speed" as occasion demands) is high, the lateral acceleration per unit steering angle is large. Therefore, if the amount of reduction in the steering angle is fixed to the vehicle speed, for example, the vehicle deviates from the target driving route in a high vehicle speed area and an actual steering direction could be opposite to the required steering direction. Alternatively, if such a trouble in the high vehicle speed area is avoided, the speed of the following for the target driving route will likely decrease in a low vehicle speed area. In other words, the stabilization of the vehicle behavior is prevented anyway. Therefore, by setting the target relative rotation angle in accordance with the vehicle speed, it is possible to perform the following for the target driving route, highly accurately, while suppressing the destabilization of the vehicle behavior.

In another aspect of the driving support apparatus of the vehicle of the present invention, the first setting device sets a target rudder angle as the first control target value, the first controlling device controls the rudder angle varying device on the basis of the set target rudder angle, the second setting device sets a target assist torque so as to cancel a reaction torque applied to the steering wheels with the control of the rudder angle varying device based on the target rudder angle, as the second control target value, and the second controlling device controls the steering torque assisting device on the basis of the set target assist torque.

According to this aspect, the target rudder angle for making the vehicle follow the target driving route is set as the first control target value, and the rudder angle varying device is controlled on the basis of the set target rudder angle. In other words, as opposed to the aforementioned various aspects, the rudder angle varying device functions as the main system for the purpose of the following for the target driving route.

Here, if the rudder angle is varied by the rudder angle varying device, a proper reaction torque is applied to the steering input shaft which can be coupled with the steered wheels directly or indirectly (Incidentally, if the steered wheels as the control target of the rudder angle varying device are rear wheels, the steering input shaft is preferably not coupled with the steered wheels, but front wheels as the steered wheels which can play a role of normal steering of the vehicle can be coupled with the steering input shaft). If this reaction torque is not loaded on the steering input shaft side, the steering wheel is rotationally driven in the opposite direction by this reaction torque, by using such a steering system that inertia weight, friction, and the like are apparently larger than the steering wheel as a supporting point or fulcrum. At this time, if the driver holds the steering wheel, it will be no problem as the operation of the rudder angle varying device, but the driver will experience an extremely unnatural steering feeling, such as the vehicle's turning right even in steering left, due to an influence of the reaction torque acting in the opposite direction of the turning direction of the vehicle.

Thus, according to this aspect, the steering torque assisting device which operates to suppress the change in the vehicle behavior is driven-controlled on the basis of the target assist torque as the second control target value set by the seconds setting device so as to cancel the reaction torque applied to the steering wheel, and the reaction torque applied to the steering wheel is reduced to some extent, at least in comparison with cases where the compensation control of the reaction torque of this type is not performed at all. Alternatively, ideally, this type of reaction torque is completely canceled. Therefore, it is possible to reduce at least the uncomfortable feeling when the driver holds the steering wheel, and ideally, it is possible to make the vehicle follow the target driving route even in a so-called hands-free state in which the driver does not hold the steering wheel at all. Moreover, at this time, the target assist torque merely reduces the reaction torque generated in the following for the target driving route, and it has no influence on the steering torque generated by the driver operating the steering wheel on the driver's own will. Therefore, there is no deterioration in the steering feeling.

In one aspect of the driving support apparatus of the vehicle of the present invention in which the target rudder angle is set as the first control target value, the steered wheels are front wheels which are coupled with the steering input shaft via a steering output shaft, and the second setting device sets the target assist torque so as to cancel at least one portion of a first portion reaction torque caused by motion of the steering output shaft, a second portion reaction torque caused by motion of the steering torque assisting device, and a third portion reaction torque caused by an axial force from the steered wheels.

In cases where the rudder angle varying device function as the main system associated with the following for the target driving route, if the steered wheels as the target of the control of the rudder angle by the rudder angle varying device are the front wheels which are coupled with the steering input shaft via the steering output shaft, the aforementioned reaction torque can be defined by the first portion reaction torque caused by the motion of the steering output shaft, the second portion reaction torque caused by the motion of the steering torque assisting device, and the third portion reaction torque caused by the axial force generated by the contact of the front wheels with a road surface.

Therefore, by setting the target assist torque to cancel at least one portion and desirably all of them, it is possible to effectively reduce only the reaction torque applied to the steering wheel when the vehicle is made follow the target driving route by the rudder angle varying device, which is extremely useful in practice in order to stabilize the vehicle behavior.

Incidentally, in this aspect, the second setting device may set the target assist torque corresponding to the first portion reaction torque so as to include (1) a first inertia correction term which has the same sign as that of angular acceleration of the steered wheels and which corrects an influence of inertia of the steering output shaft, (2) a first viscosity correction term which has the same sign as that of angular velocity of the steered wheels and which corrects an influence of viscosity of the steering output shaft, and (3) a first friction correction term which has the same sign as that of angular velocity of the steered wheels and which corrects an influence of friction of the steering output shaft.

The first portion reaction torque can be determined mainly on the basis of the inertia, viscosity, and friction of the steering output shaft. Therefore, it is possible to accurately determine the target assist torque capable of canceling the first portion reaction torque on the basis of them.

Moreover, in this aspect, the second setting device may set the target assist torque corresponding to the second portion reaction torque so as to include (1) a second inertia correction term which has the same sign as that of angular acceleration of the steered wheels and which corrects an influence of inertia of the steering torque assisting device, (2) a second viscosity correction term which has the same sign as that of angular velocity of the steered wheels and which corrects an influence of viscosity of the steering torque assisting device, and (3) a second friction correction term which has the same sign as that of angular velocity of the steered wheels and which corrects an influence of friction of the steering torque assisting device.

The second portion reaction torque can be determined mainly on the basis of the inertia, viscosity, and friction of the steering torque assisting device. Therefore, it is possible to accurately determine the target assist torque capable of canceling the second portion reaction torque on the basis of them.

Furthermore, in this aspect, the second setting device may set the target assist torque corresponding to the third portion reaction torque so as to take into account a response delay of the axial force and to have the same sign as that of the rudder angle.

Until the axial force of the steered wheels is actually transmitted to the steering wheel as one component of the reaction torque, there is a temporal response delay which can be determined in accordance with the driving condition of the vehicle, the structure of the vehicle and the like. Therefore, it is possible to accurately determine the target assist torque capable of canceling the third portion reaction torque on the basis of the response delay.

In another aspect of the driving support apparatus of the vehicle of the present invention in which the target rudder angle is set as the first control target value, the steered wheels may be rear wheels which are not coupled with the steering input shaft, and the second setting device may set the target assist torque having a different sign from that of the rudder angle so as to cancel a reaction torque caused by an axial force from the steered wheels in view of a response delay of the axial force.

If the steered wheels as the target of the control of the rudder angle by the rudder angle varying device are the rear wheels which are not mechanically coupled with the steering input shaft, it is possible to accurately determine the target assist torque capable of canceling the reaction torque acting on the steering wheel in view of the temporal response delay which can be determined in accordance with the driving condition of the vehicle, the structure of the vehicle, and the like. Of course, the rudder angle of the front wheels are also changed preferably at least in accordance with the normal steering operation by the driver; however, in this case, it is independent of the vehicle's following for the target driving route. If the control target of the rudder angel varying device includes both the front and rear wheels, then, of course, the target assist torque corresponding to the axial force of the front wheels described above can be set.

In particular, if the rudder angel varying device whose control target is the rear wheels is used as the main system associated with the following for the target driving route, the reaction torque to be canceled by the application of the assist torque or the like from the steering torque assisting device does not include the components caused by the motion of the steering torque assisting device and the steering output shaft described above. Therefore, the setting of the target assist torque can be performed relatively easily. However, the front wheels and the rear wheels have opposite acting directions of the axial force with respect to a direction indicated by the rudder angle. Therefore, in this aspect, the target assist torque is set so as to apply the assist torque having a different sign from that of the rudder angle (i.e. such that the assist torque operates in a left or counterclockwise (right or clockwise) rotational direction upon right (left) steering).

The operation and other advantages of the present invention will become more apparent from the embodiments explained below.

Brief Description of Drawings

[FIG. 1] FIG. 1 is a schematic configuration diagram conceptually showing the structure of a vehicle in a first embodiment of the present invention.

[FIG. 2] FIG. 2 is a flowchart showing LKA control performed in the vehicle in FIG. 1, in the first embodiment.

[FIG. 3] FIG. 3 is a schematic diagram showing a relation between target lateral acceleration GYTG and a LKA basic target angle θLKB in the first embodiment.

[FIG. 4] FIG. 4 is a schematic diagram showing a relation between a curvature R and an adjustment gain K2 in the first embodiment.

[FIG. 5] FIG. 5 is a flowchart showing EPS control in the first embodiment.

[FIG. 6] FIG. 6 is a schematic diagram showing a relation between an EPS basic target torque TBASE and a driver steering torque MT in the first embodiment.

[FIG. 7] FIG. 7 is a flowchart showing VGTS control in the first embodiment.

[FIG. 8] FIG. 8 is a schematic diagram showing a relation between a steering transmission ratio K1 and a vehicle speed V in the first embodiment.

[FIG. 9] FIG. 9 is a flowchart showing LKA control in a second embodiment of the present invention.

[FIG. 10] FIG. 10 is a schematic diagram showing a relation between a LKA front wheel target rudder angle θLKA_FR and target lateral acceleration GYTG in the second embodiment.

[FIG. 11] FIG. 11 is a flowchart showing VGRS control in the second embodiment.

[FIG. 12] FIG. 12 is a schematic diagram showing a relation between an inertia correction torque T1 and the angular acceleration of steered wheels in the second embodiment.

[FIG. 13] FIG. 13 is a schematic diagram showing a relation between a viscosity correction torque T2 and the angular velocity of the steered wheels in the second embodiment.

[FIG. 14] FIG. 14 is a schematic diagram showing a relation between a friction correction torque T3 and the angular acceleration of the steered wheels in the second embodiment.

[FIG. 15] FIG. 15 is a schematic diagram showing a relation between an axial force correction torque T4 and a LKA front wheel target rudder angle correction value θfLKA_FR in the second embodiment.

[FIG. 16] FIG. 16 is a schematic configuration diagram conceptually showing the basic structure of a vehicle 30 in a third embodiment of the present invention.

[FIG. 17] FIG. 17 is a flowchart showing LKA control in the third embodiment.

[FIG. 18] FIG. 18 is a schematic diagram showing a relation between a LKA rear wheel target rudder angle θLKA_RR and target lateral acceleration GYTG in the third embodiment.

[FIG. 19] FIG. 19 is a schematic diagram showing a relation between an axial force correction torque T5 and a LKA rear wheel target rudder angle correction value θfLKA_RR in the third embodiment.

Description of Reference Codes

| | |
|---|---|
| FL, FR | wheels |
| 10 | vehicle |
| 11 | steering wheel |
| 12 | upper steering shaft |
| 13 | rear steering shaft |
| 14 | pinion gear |
| 16 | steering torque sensor |
| 17 | steering angle sensor |
| 18 | rotation angle sensor |
| 100 | ECU |
| 200 | VGR actuator |
| 300 | VGRS driving apparatus |
| 400 | EPS actuator |
| 500 | EPS driving apparatus |

Best Mode for Carrying Out the Invention

Hereinafter, various embodiments of the driving support apparatus of the vehicle in the present invention will be explained with reference to the drawings.

<First Embodiment>

<Structure of Embodiment>

Firstly, with reference to FIG. 1, the structure of a vehicle 10 in a first embodiment of the present invention will be explained. FIG. 1 is a schematic configuration diagram conceptually showing the structure of the vehicle 10.

In FIG. 1, the vehicle 10 is provided with a pair of front wheels FL and FR on either sides as steered wheels, and it is constructed to move in a desired direction by steering the front wheels. The vehicle 10 is provided with an ECU 100, a VGRS actuator 200, a VGRS driving apparatus 300, an EPS actuator 400 and an EPS driving apparatus 500.

The ECU 100 is provided with a CPU (Central Processing Unit), a ROM (Read Only Memory) and a RAM (Random Access Memory), each of which is not illustrated, and it is an electronic control unit capable of controlling all the operations of the vehicle 10. The ECU 100 is one example of the "driving support apparatus of the vehicle" of the present invention. The ECU 100 is constructed to perform each of LKA control, EPS control and VGRS control described later, in accordance with a control program stored in the ROM.

Incidentally, the ECU 100 is a unified or one-body electronic control unit, constructed to function as one example of each of the "first setting device", the "first controlling device", the "second setting device" and the "second controlling device" of the present invention. The operations of each of the devices are all performed by the ECU 100. However, the physical, mechanical and electrical configurations of each of the devices of the present invention are not limited to this, and each of the devices may be constructed as various computer systems, such as a plurality of ECUs, various processing units, various controllers, or micro computer apparatuses.

In the vehicle 10, a steering input given by a driver via a steering wheel 11 is transmitted to an upper steering shaft 12, as a shaft which is coaxially rotatably coupled with the steering wheel 11 and which can rotate in the same direction as that of the steering wheel 11. The upper steering shaft 12 is one example of the "steering input shaft" of the present invention. The upper steering shaft 12 is coupled with the VGRS actuator 200 at the end on the downstream side.

The VGRS actuator 200 is one example of the "rudder angle varying device" of the present invention, which is provided with a housing 201, a VGRS motor 202, and a reduction gear mechanism 203.

The housing 201 is the case of the VGRS actuator 202 for accommodating the VGRS motor 202 and the reduction gear mechanism 203. The aforementioned end on the downstream side of the upper steering shaft 12 is fixed to the housing 201, and the housing 201 can rotate with the upper steering shaft 12.

The VGRS motor 202 is a DC brushless motor having a rotor 202a as a rotator, a stator 202b as a stationary part, and a rotating shaft 202c as the output shaft of a driving force. The stator 202b is fixed to the inside of the housing 201, and the rotor 202a is rotatably held within the housing 201. The rotating shaft 202c is coaxially rotatably fixed to the rotor 202a, and its end on the downstream side is coupled with the reduction gear mechanism 203.

The reduction gear mechanism 203 is a planetary gear mechanism having a plurality of rotational elements which can perform differential rotation (a sun gear, a carrier, and a ring gear). Of the plurality of rotational elements, the sun gear as the first rotational element is coupled with the rotating shaft 202c of the VGRS motor 202, and the carrier as the second rotational element is coupled with the housing 201. Moreover, the ring gear as the third rotational element is coupled with a lower steering shaft 13 as one example of the "steering output shaft" of the present invention.

According to the reduction gear mechanism 203 having such a structure, the rotational speed of the upper steering shaft 12 according to the operation amount of the steering wheel 11 (i.e. the rotational speed of the housing 201 coupled with the carrier) and the rotational speed of the VGRS motor 202 (i.e. the rotational speed of the rotating shaft 202c coupled with the sun gear) uniquely determine the rotational speed of the lower steering shaft 13 coupled with the ring gear as the remaining one rotational element. At this time, it is possible to perform increase / reduction control on the rotational speed of the lower steering shaft 13a by performing increase / reduction control on the rotational speed of the VGRS motor 202 by the differential action between the rotational elements. In other words, the upper steering shaft 12 and the lower steering shaft 13 can perform relative rotation by the action of the VGRS motor 202 and the reduction gear mechanism 203. Moreover, in terms of the structure of each rotational element in the reduction gear mechanism 203, the rotational speed of the VGRS motor 202 is transmitted to the lower steering shaft 13 in the state that it is reduced in accordance with a predetermined reduction ratio determined in accordance with a gear ratio between the rotational elements.

As described above, in the vehicle 10, due to the fact that the upper steering shaft 12 and the lower steering shaft 13 can perform the relative rotation, a steering transmission ratio is continuously variable in a predetermined set range, wherein the steering transmission ratio is a ratio between a steering angle MA as the amount of rotation of the upper steering shaft 12 and a rudder angle θst of the front wheels as the steered wheels which is uniquely determined according to the amount of rotation of the lower steering shaft 13 (which is also related to the gear ratio of a rack and pinion mechanism described later).

Incidentally, the reduction gear mechanism 204 may have not only the planetary gear mechanism exemplified here but also another aspect (e.g. an aspect in which gears, each having the different number of teeth, are coupled with the upper steering shaft 12 and the lower steering shaft 13, in which a flexible gear in contact with each of the gears in one portion is set, and in which the flexible gear is rotated by a motor torque transmitted via a wave generator, thereby relatively rotating the upper steering shaft 12 and the lower steering shaft 13). Alternatively, the reduction gear mechanism 203 may have a physical, mechanical, or mechanistic aspect different from the aforementioned aspect even in a planetary gear mechanism.

The VGRS driving apparatus 300 is an electric drive circuit, including a PWM circuit, a transistor circuit, an inverter, and the like, capable of electrifying the stator 202b of the VGRS motor 202. The VGRS driving apparatus 300 is electrically connected to a not-illustrated battery, and it can supply a driving voltage to the VGRS motor 202 by using an electric power supplied from the battery. Moreover, the VGRS driving apparatus 300 is electrically connected to the ECU 100, and its operation is controlled by the ECU 100. Incidentally, the VGRS driving apparatus 300 and the VGRS actuator 202 constitute one example of the "rudder angle varying device" of the present invention.

The rotation of the lower steering shaft 13 is transmitted to a rack and pinion mechanism. The rack and pinion mechanism is a steering force transmission mechanism including: a pinion gear 14 connected to the downstream side edge of the lower steering shaft 13; and a rack bar 15 in which there are formed gear teeth which engage with the gear teeth of the pinion gear 14. By converting the rotation of the pinion gear 14 to the horizontal motion of the rack bar 15 in FIG. 1, a steering force is transmitted to each of the steered wheels via tie rods and knuckles (whose reference numerals are omitted) coupled with the both ends of the rack bar 15. In other words, in the vehicle 10, a so-called rack and pinion type steering method is realized.

The EPS actuator 400 is one example of the "steering torque assisting device" of the present invention, provided with an EPS motor as a DC brushless motor including a not-illustrated rotor as a rotator to which a permanent magnet is attached and a stator as a stationary part which surrounds the rotor. The EPS motor can generate an assist torque TA in the direction of rotation of the rotor, which is rotated by the action of a rotating magnetic field formed in the EPS motor due to the electrification to the stator via the EPS driving apparatus 500.

On the other hand, a not-illustrated reduction gear is fixed to a motor shaft as the rotation shaft of the EPS motor, and the reduction gear also engages with the pinion gear 14. Thus, the assist torque TA coming from the EPS motor functions as an assist torque for assisting the rotation of the pinion gear 14. The pinion gear 14 is coupled with the lower steering shaft 13 as described above, and the lower steering shaft 13 is coupled with the upper steering shaft 12 via the VGRS actuator 200. Therefore, a driver steering torque MT applied to the upper steering shaft 12 is transmitted to the rack bar 15 in the form that it is assisted by the assist torque TA, as occasion demands, by which the driver's steering load is reduced.

The EPS driving apparatus 500 is an electric drive circuit, including a PWM circuit, a transistor circuit, an inverter, and the like, capable of electrifying the stator of the EPS motor. The EPS driving apparatus 500 is electrically connected to a not-illustrated battery, and it can supply a driving voltage to the EPS motor by using an electric power supplied from the battery. Moreover, the EPS driving apparatus 500 is electrically connected to the ECU 100, and its operation is controlled by the ECU 100. Incidentally, the EPS driving apparatus 500 and the EPS actuator 400 constitute one example of the "steering torque assisting device" of the present invention.

Incidentally, the aspect of the "steering force applying device" of the present invention is not limited to the aspect exemplified herein. For example, the assist torque TA outputted from the EPS motor may be transmitted directly to the lower steering shaft 13 with a reduction in the rotational speed by a not-illustrated reduction gear, or it may be applied as a force for assisting the reciprocating motion of a rack bar 16a. In other words, as long as the assist torque TA outputted from the EPS motor 400 can end up being used as at least one portion of the steering force for steering each of the steered wheels, the specific structure of the steering torque assisting device of the present invention is, in effect, not limited at all.

On the other hand, the vehicle 10 is provided with various sensors including a steering torque sensor 16, a steering angle sensor 17, and a rotation sensor 18.

The steering torque sensor 16 is a sensor capable of detecting the driver steering torque MT given via the steering wheel 11 by the driver. Explaining it more specifically, the upper steering shaft 12 has such a structure that it is divided into an upstream part and a downstream part and that the parts are mutually coupled by a not-illustrated torsion bar. To the both ends on the upstream side and the downstream side of the torsion bar, rings for detecting a rotational phase difference are fixed. The torsion bar is twisted in its rotational direction in accordance with a steering torque (i.e. driver steering torque MT) transmitted via the upstream part of the upper steering shaft 12 when the driver of the vehicle 10 operates the steering wheel 11. Therefore, upon the transmission of the steering torque, there is the rotational phase difference between the rings for detecting the rotational phase difference. The steering torque sensor 16 can detect the rotational phase difference, convert the rotational phase difference to the steering torque, and output it as an electrical signal corresponding to the steering torque MT. Moreover, the steering torque sensor 16 is electrically connected to the ECU 100, and the detected steering torque MT is referred to by the ECU 100 with a constant or irregular period.

The steering angle sensor 17 is an angle sensor capable of detecting the steering angle MA which indicates the amount of rotation of the upper steering shaft 12. The steering angle sensor 17 is electrically connected to the ECU 100, and the detected steering angle MA is referred to by the ECU 100 with a constant or irregular period.

The rotation sensor 18 is a rotary encoder capable of detecting a rotational phase difference $\Delta\theta$ between the housing 201 in the VGRS actuator 200 (i.e. which is equivalent to the upper steering shaft 12 in terms of rotation angle) and the lower steering shaft 13. The rotation sensor 18 is electrically connected to the ECU 100, and the detected rotational phase difference $\Delta\theta$ is referred to by the ECU 100 with a constant or irregular period.

A vehicle speed sensor 19 is a sensor capable of detecting a vehicle speed V as the speed or velocity of the vehicle 10. The vehicle speed sensor 19 is electrically connected to the ECU 100, and the detected vehicle speed V is referred to by the ECU 100 with a constant or irregular period.

An in-vehicle camera 20 is an imaging apparatus which is disposed on the front nose of the vehicle 10 and which can image a predetermined area ahead of the vehicle 10. The in-vehicle camera 20 is electrically connected to the ECU 100, and the imaged area ahead is sent out to the ECU 100 as image data with a constant or irregular period. The ECU 100 can analyze the image data and obtain various data necessary for LKA control described later.

<Operations in Embodiment>

Hereinafter, with reference to the drawings as occasion demands, the operations in the embodiment will be explained.

Firstly, with reference to 2, an explanation will be given on the details of the LKA control performed by the ECU 100. FIG. 2 is a flowchart showing the LKA control. Incidentally, the LKA control is control for making the vehicle 10 follow a target driving route (lane) and for realizing one portion of a driving support system owned by the vehicle 10.

In FIG. 2, the ECU 100 reads various signals including sensor signals associated with the aforementioned various sensors, various flags, and operation signals for operating various switches and the like provided for the vehicle 10 (step S101) and judges whether or not a LKA mode is selected as a result of the driver operating an operation button for initiating the LKA control disposed in the vehicle interior of the vehicle 10 in advance (step S102). If the LKA mode is not selected (the step S102: NO), the ECU 100 returns the process to the step S101.

If the LKA mode is selected (the step S102: YES), the ECU 100 judges whether or not a white line (which is not necessarily white) for defining the target driving route of the LKA on the basis of the image data transmitted from the in-vehicle camera 20 (step S103). If the white line is not detected (the step S103: NO), the ECU 100 returns the process to the step S101 because the target traveling route cannot be defined. On the other hand, if the white line is detected (the step S103: YES), the ECU 100 calculates various road surface information necessary when the vehicle 10 is made follow the target traveling route (step S104).

In the step S104, a curvature R of the target traveling route (i.e. inverse of a radius), a lateral deviation Y between the white line and the vehicle 10, and a yaw angle deviation $\phi$ between the white line and the vehicle 10 are calculated. Incidentally, various aspects including a known image recognition algorithm can be applied to an aspect of calculating information required for the control to follow the target driving route of this type and it has a weak correlation with the essential part of the present invention. Thus, the calculation aspect will not be mentioned.

If calculating the various road surface information, the ECU 100 calculates target lateral acceleration GYTG necessary to make the vehicle 10 follow the target driving route (step S105). Incidentally, the target lateral acceleration GYTG can be also calculated in accordance with various known algorithms or arithmetic expressions. Alternatively, the ECU 100 may calculate the target lateral acceleration GYTG by holding a target lateral acceleration map, which uses the curvature R, the lateral deviation Y and the yaw angle deviation $\phi$ described above, in a proper storing device such as a ROM in advance and by selecting an appropriate value as occasion demands (wherein this type of selection is also one aspect of the calculation).

If the target lateral acceleration GYTG is calculated, the process branches to two systems. In other words, in one process, the ECU 100 calculates a LKA target assist torque TLK (step S105) and stores the calculated LKA target assist torque TLK into a proper rewritable storing device, such as a flash memory and a RAM (step S107). The LKA target assist torque TLK is defined in a LKA target assist torque map, which uses the target lateral acceleration GYTG and the vehicle speed V, stored in a ROM in advance, and the ECU 100 calculates the LKA target assist torque TLK by selecting an appropriate numerical value from the map. Incidentally, the LKA target assist torque TLK is one example of the "first control target value" of the present invention and one example of the "target assist torque".

Moreover, in the other process, the ECU 100 calculates a LKA basic target angle θLKB on the basis of the target lateral acceleration GYTG (step S108), and then calculates an adjustment gain K2 on the basis of the curvature R (step S109). Moreover, the ECU 100 calculates a LKA correction target angle θLK in accordance with the following equation (1) (step S110). Incidentally, the LKA correction target angle θLK is one example of the "second control target value" of the present invention and one example of the "target relative rotation angle" of the present invention. If calculating the LKA correction target angle θLK, the ECU 100 stores the calculated the LKA correction target angle θLK into the storing device such as a RAM and a flash memory (step S111).

$$\theta LK = \theta LKB \times K2 \cdots (1)$$

Now, with reference to FIG. 3, an explanation will be given on a relation between the target lateral acceleration GYTG and the LKA basic target angle θLKB. FIG. 3 is a schematic diagram showing the relation between the target lateral acceleration GYTG and the LKA basic target angle θLKB.

In FIG. 3, the vertical axis shows the LKA basic target angle θLKB, and the horizontal axis shows the target lateral acceleration GYTG. Here, an area on the left side of an origin line corresponding to the target lateral acceleration GYTG=0 denotes target lateral acceleration corresponding to a vehicle left direction, and an area on the right side denotes lateral acceleration corresponding to a vehicle right direction. Moreover, an area on the upper side of an origin line corresponding to the LKA basic target angle θLKB=0 corresponds to a rudder angle in the vehicle right direction, and an area on the lower side corresponds to a rudder angle in the vehicle left direction. Therefore, the LKA basic target angle θLKB has a symmetrical characteristic to the origin line. The LKA basic target angle θLKB has such a characteristic that its absolute value linearly increases with respect to the target lateral acceleration GYTG, except for a dead-band region near the target lateral acceleration GYTG=0.

On the other hand, FIG. 3 illustrates the characteristics of the LKA basic target angle θLKB with respect to three types of vehicle speeds V which are the vehicle V=V1, V2 (V2>V1) and V3 (V3>V2) in an alternate long and short line, a dashed line, and a solid line, respectively. As is clear from FIG. 3, the LKA basic target angle θLKB is set on the reduction side with an increase in the vehicle speed. This is because the degree of the lateral acceleration generated with respect to the rudder angle increases with an increase in the vehicle speed. The setting operation is one example of an operation of "setting the target relative rotation angle so as to reduce amount of reduction in the steering angle with an increase in speed of the vehicle" in the present invention.

Incidentally, the ROM of the ECU 100 stores therein a LKA basic target angle map which quantifies the relation shown in FIG. 3 in advance (of course, the vehicle speed V as a parameter value is finer), and an appropriate value is selected from the LKA basic target angle map in the step S108.

Now, with reference to FIG. 4, a relation between the curvature R and the adjustment gain K2 will be explained. FIG. 4 is a schematic diagram showing the relation between the curvature R and the adjustment gain K2.

In FIG. 4, the vertical axis shows the adjustment gain K2, and the horizontal axis shows the curvature R of the target driving route. Therefore, the target driving route is suddenly curved (i.e. sharp curve) with movement to the right side in FIG. 4. As shown in FIG. 4, the adjustment gain K2 is set in an area less than 1, and it is set to be smaller with an increase in the curvature R (i.e. with a shaper curve). This is because the steering of the steering wheel 11 is allowed (an uncomfortable feeling is not caused from the driver's viewpoint) with an increase in the curvature. The setting operation is one example of an operation of "setting the target relative rotation angle so as to reduce amount of reduction in the steering angle with an increase in curvature of the target driving route" in the present invention.

Incidentally, the ROM of the ECU 100 stores therein an adjustment gain map which quantifies the relation shown in FIG. 4 in advance, and an appropriate value is selected from the adjustment gain map in the step S109.

Back in FIG. 2, if the LKA target assist torque TLK and the LKA correction target angle θLK are calculated in the step S107 and the step S111, respectively, the process is returned to the step S101. The LKA control is performed as described above. On the other hand, the actual operation of the vehicle 10 following the target driving route is realized by EPS control. Now, with reference to FIG. 5, the details of the EPS control will be explained. FIG. 5 is a flowchart showing the EPS control. Incidentally, in FIG. 5, the overlap points with FIG. 2 will carry the same reference numerals, and the explanation thereof will be omitted as occasion demands.

In FIG. 5, the ECU 100 reads the various signals (the step S101) and then obtains the driver steering torque MT and the vehicle speed V (step S201). Then, the ECU 100 calculates an EPS basic target torque TBASE, which is the basic value of the assist torque TA to be outputted from the EPS motor of the EPS actuator 400, on the basis of the obtained driver steering torque MT and the obtained vehicle speed V (step S202).

Now, with reference to FIG. 6, an explanation will be given on a relation between the EPS basic target torque TBASE and the driver steering torque MT. FIG. 6 is a schematic diagram showing the relation between the EPS basic target torque TBASE and the driver steering torque MT.

In FIG. 6, the vertical axis shows the EPS basic target torque TBASE, and the horizontal axis shows the driver steering torque MT. Incidentally, an area on the left side of an origin line corresponding to the driver steering torque MT=0 corresponds to a steering operation of steering to the left side of the vehicle, and an area on the right side corresponds to a steering operation of steering to the right side of the vehicle. Therefore, the EPS basic target torque TBASE has a symmetrical characteristic to the origin line in FIG. 6.

On the other hand, FIG. 6 illustrates the characteristics of the EPS basic target torque TBASE with respect to the three types of vehicle speeds V which are the vehicle V=V1, V2 (V2>V1) and V3 (V3>V2) in a solid line, a dashed line, and an alternate long and short line, respectively. As is clear from FIG. 6, the EPS basic target torque TBASE is set on the reduction side with an increase in the vehicle speed. This is because the rudder angle for obtaining the necessary lateral acceleration reduces with an increase in the vehicle speed. By increasing a force required for the steering of the steering wheel 11 on the high vehicle speed side (i.e. a state in which the steering wheel feels heavy), the driver's excessive operation is prevented, thereby stabilizing the behavior of the vehicle 10. Incidentally, the ROM of the ECU 100 stores therein an EPS basic target torque map which quantifies the relation shown in FIG. 6 in advance (of course, the vehicle speed V as a parameter value is finer), and an appropriate value is selected from the EPS basic target torque map in the step S202.

Back in FIG. 5, the ECU 100 calculates an EPS final target torque TTG in accordance with the following equation (2), on the basis of the EPS basic target torque TBASE calculated in the step S202 and the LKA target assist torque TLK previously calculated and stored (step S203).

$$TTG = TBASE + TLK \cdots (2)$$

If calculating the EPS final target torque TTG, the ECU 100 controls the EPS driving apparatus 500 on the basis of the calculated EPS final target torque TTG to output the assist torque TA corresponding to the EPS final target torque TTG from the EPS motor of the EPS actuator 400 (step S204). If the step S204 is performed, the process is returned to the step S101

As described above, in the embodiment, the EPS actuator 400 functions as a main system for making the vehicle 10 follow the target driving route, and in addition to the normal assist torque corresponding to the driver's steering operation, the LKA target assist torque TLK for making the vehicle 10 follow the target driving route is outputted.

On the other hand, the EPS actuator 400 does not change the relation between the steering angle of the steering wheel 11 and the rudder angle of the steered wheels. Thus, if the target following is performed by the application of the assist torque from the EPS actuator 400, the steering wheel 11 is steered in accordance with a change in the rudder angle independently of the driver's will. This makes the driver feel uncomfortable and this can likely induce an unnecessary steering operation on the driver side. Thus, in the embodiment, a change in the behavior when the vehicle 10 is made follow the target driving route by the EPS actuator 400 as described above is compensated (or corrected) by VGRS control.

Now, with reference to FIG. 7, the details of the VGRS control will be explained. FIG. 7 is a flowchart showing the VGTS control. Incidentally, in FIG. 7, the overlap points with FIG. 2 will carry the same reference numerals, and the explanation thereof will be omitted as occasion demands.

In FIG. 7, after reading the various signals (the step S101), the ECU 100 obtains the vehicle speed V and the steering angle MA (step S301). The ECU 100 also calculates a VGRS basic target angle θVG, which is the basic value of the relative rotation angle of the lower steering shaft 13 with respect to the steering angle MA as the rotation angle of the upper steering shaft 12, in accordance with the following equation (3), on the basis of the obtained vehicle speed V and the obtained steering angle MA (step S302).

$$\theta VG = K1 \times MA \cdots (3)$$

In the above equation (3), K1 is the steering transmission ratio for defining the rotation angle of the lower steering shaft 13 with respect to the steering angle MA, and it is a numerical value which can vary depending on the vehicle speed V. Now, with reference to FIG. 8, an explanation will be given on a relation between the steering transmission ratio K1 and the vehicle speed V. FIG. 8 is a schematic diagram showing the relation between the steering transmission ratio K1 and the vehicle speed V.

In FIG. 8, the steering transmission ratio K1 is 0 at a vehicle speed Vth in a middle vehicle speed area (i.e. the ratio of rotation between the upper steering shaft 12 and the lower steering shaft 13 is 1:1), is greater than 0 on the lower vehicle speed side lower than Vth, and is less than 0 on the higher vehicle speed side. In other words, the larger rudder angle can be obtained by the smaller steering angle on the lower vehicle speed side. This is because the lateral acceleration with respect to the rudder angle increases with an increase in the vehicle speed, as described above.

Back in FIG. 7, the ECU 100 further calculates a VRGS final target angle θTGF in accordance with the following equation (4), on the basis of the calculated VGRS basic target angle θVG and the LKA correction target angle θLK previously calculated and stored (step S303).

$$\theta TGF = \theta VG + \theta LK \cdots (4)$$

If calculating the VRGS final target angle θTGF, the ECU 100 controls the VGRS driving apparatus 300 on the basis of the calculated VGRS final target angle θTGF to rotate the VGRS motor 202 of the VGRS actuator 202 by an amount corresponding to the VRGS final target angle θTGF (step S304). If the step S304 is performed, the process is returned to the step S101.

As described above, according to the VGRS control in the embodiment, the LKA correction target angle θLK is separately added to the target angle of the normal VGRS. Thus, it is possible to suppress a change in the steering angle MA when the vehicle 10 is made follow the target driving route by the previous EPS control. Thus, the uncomfortable feeling given to the driver is reduced and the driver's psychological burden can be reduced, by which the behavior of the vehicle 10 can be stabilized.

On the other hand, considering that the change in the steering angle MA is suppressed by the LKA correction target angle θLK as described above, it is unnecessary to change the change characteristic of the rotation angle of the lower steering shaft 13 with respect to the steering angle MA (i.e. the steering transmission ratio K1) when the steering angle MA is reduced in the VGRS control in the embodiment. Thus, it is unnecessary to increase the steering transmission ratio K1 and to reduce an influence of the change in the rudder angle caused by the EPS control on the steering angle, and such a problem is also preferably solved that an increase in the change in the rudder angle with respect to the driver's steering, which is caused when such measures are taken, destabilizes the vehicle behavior. Moreover, considering that the change in the steering angle MA can be suppressed by the LKA correction target angle θLK, the steering transmission ratio K1 may be reduced in comparison with cases where this type of following for the target driving route is not performed, thereby to further reduce the influence of the driver's steering operation on the rudder angle during the execution of the LKA control.

<Second Embodiment>

Next, as a second embodiment of the present invention, an explanation will be given on LKA control different from that in the first embodiment. Firstly, with reference to FIG. 9, the details of the LKA control in the embodiment will be explained. FIG. 9 is a flowchart showing the LKA control in the second embodiment. Incidentally, in FIG. 9, the overlap points with FIG. 2 will carry the same reference numerals, and the explanation thereof will be omitted as occasion demands. Moreover, the structure of the vehicle in the second embodiment is assumed to be the same as that of the vehicle 10 in the first embodiment.

In FIG. 9, if calculating the target lateral acceleration GYTG (the step S105), the ECU 100 calculates a LKA front wheel target rudder angle θLKA_FR on the basis of the calculated target lateral acceleration GYTG (step S401). If calculating the LKA front wheel target rudder angle θLKA_FR, the ECU 100 stores the calculated LKA front wheel target rudder angle θLKA_FR into a proper storing device (step S402). Incidentally, the LKA front wheel target rudder angle θLKA_FR is another example of the "first control target value" of the present invention.

Now, with reference to FIG. 10, an explanation will be given on a relation between the LKA front wheel target rudder angle θLKA_FR and the target lateral acceleration GYTG. FIG. 10 is a schematic diagram showing the relation between the LKA front wheel target rudder angle θLKA_FR and the target lateral acceleration GYTG.

In FIG. 10, the LKA front wheel target rudder angle θLKA_FR has the same characteristics between upon left turning and upon right turning, and it is an increasing function, which basically increases linearly to the target lateral acceleration GYTG, except for the deadband region near the target lateral acceleration GYTG=0.

Moreover, FIG. 10 illustrates, as one example, the characteristics of the LKA front wheel target rudder angle θLKA_FR with respect to the vehicle speeds V1, V2 (V2>V1) and V3 (V3>V2) in a solid line, a dashed line, and an alternate long and short line, respectively. As shown in FIG. 10, the LKA front wheel target rudder angle θLKA_FR is set to be smaller with an increase in the vehicle speed if the target lateral acceleration GYTG is constant.

Incidentally, the ROM of the ECU 100 stores therein a LKA front wheel target rudder angle map which quantifies the relation shown in FIG. 10 in advance, and an appropriate value is selected from the LKA front wheel target rudder angle map in the step S401.

Now, with reference to FIG. 11, the details of VGRS control in the second embodiment will be explained. FIG. 11 is a flowchart showing the VGRS control in the second embodiment. Incidentally, in FIG. 11, the overlap points with FIG. 7 will carry the same reference numerals, and the explanation thereof will be omitted as occasion demands.

In FIG. 11, if calculating the VGRS basic target angle θVG, the ECU 100 calculates the same LKA correction target angle θLK as that in the first embodiment, on the basis of the LKA front wheel target rudder angle θLKA_FR calculated and stored in the LKA control (step S501). Here, the embodiment is constructed such that the VGRS actuator is used as a main system to make the vehicle 10 follow the target driving route. Therefore, it is necessary to convert the steering angle of each of the front wheels as the steered wheels, to the LKA correction target angle θLK. The process in the step S501 corresponds to the converting process, and the LKA correction target angle θLK is calculated as a result of an arithmetic logical process (or numerical process) based on the gear ratio of the rack and pinion mechanism.

If calculating the LKA correction target angle θLK on the basis of LKA front the wheel target rudder angle θLKA_FR, the ECU 100 calculates the VRGS final target angle θTGF (the step S303) and drives the VGRS motor 202 (the step S304), as in the first embodiment. The VGRS control in the second embodiment is performed as described above. In this manner, in the second embodiment, it is possible to make the vehicle 10 follow the target driving route by performing the rudder angle control by the VGRS actuator 200.

On the other hand, the VGRS actuator 200 is disposed in a coupling region between the upper steering shaft and the lower steering shaft 13 and is not fixed to the vehicle 10, as opposed to the EPS actuator 400. Therefore, if the driver tries to perform the rudder angle control corresponding to the LKA correction target angle θLK described above in a hands-free state in which the driver does not hold the steering wheel 11, the steering wheel 11 is steered in an opposite direction of the rudder angle direction which is originally targeted, instead of the rotation of the steered wheels, due to a reaction torque from the lower steering shaft 13, the EPS actuator 400, or the steered wheels. Alternatively, even if holding the steering wheel 11, the driver feels uncomfortable as if the driver turned the steering wheel 11 in the opposite direction of the turning direction of the vehicle 10 due to this reaction force. Thus, in the embodiment, an influence of the reaction torque generated in the following for the target driving route by the rudder angle control is compensated (or corrected) by the EPS control.

Back in FIG. 9, if calculating the LKA front wheel target rudder angle θLKA_FR, the ECU 100 calculates an inertia correction torque T1 for correcting a component caused by the inertia of the lower steering shaft 13 and the EPS actuator 400 out of this type of reaction torque (step S403). Incidentally, the inertia correction torque T1 corresponds to the sum of the "first inertia correction term" and the "second inertia correction term" of the present invention, and it is set on the basis of the angular acceleration of the steered wheels. Incidentally, the angular acceleration of the steered wheels is namely the second-order differential value of the steering angle, and the steering angle in this case is the LKA front wheel target rudder angle θLKA_FR realized by the VGRS control.

Moreover, the ECU 100 calculates a viscosity correction torque T2 for correcting a component caused by the viscosity of the lower steering shaft 13 and the EPS actuator 400 out of this type of reaction torque (step S404) and calculates a friction correction torque T3 for correcting a component caused by the friction of the lower steering shaft 13 and the EPS actuator 400 out of this type of reaction torque (step S405), in parallel with the calculation of the inertia correction torque T1. Incidentally, the viscosity correction torque T2 corresponds to the sum of the "first viscosity correction term" and the "second viscosity correction term" of the present invention, and the friction correction torque T3 corresponds to the sum of the "first friction correction term" and the "second friction correction term" of the present invention. They are set on the basis of the angular acceleration of the steered wheels. Incidentally, the angular acceleration of the steered wheels is namely the second-order differential value of the LKA front wheel target rudder angle θLKA_FR realized by the VGRS control.

Moreover, the ECU 100 calculates an axial force correction torque T4 for correcting a component caused by an axial force from the front wheels as the steered wheels out of this type of reaction torque, in parallel with the calculation of the inertia correction torque T1 (step S406). The axial force correction torque T4 corresponds to one example of the "target assist torque corresponding to the third portion reaction torque" of the present invention, and it is set on the basis of the angle of the steered wheels, i.e. the rudder angle. Incidentally, the axial force from the steered wheels is different from each of the terms corresponding to the inertia, the viscosity, and the friction described above, and it reaches the steering wheel 11 after a time point at which the steered wheels are steered from the viewpoint of the structure of the vehicle 10. Therefore, if the axial force correction torque T4 is not determined in view of this type of vehicle motion, the axial force correction torque T4 will be excessive or insufficient to the axial force component to be canceled, and it cannot necessarily reduce the reaction torque sufficiently. Thus, when calculating the axial force correction torque T4, the ECU 100 performs a filter process which takes the time reaction into account, on the LKA front wheel target rudder angle θLKA_FR, thereby calculating a LKA front wheel target rudder angle correction value θfLKA_FR. The axial force correction torque T4 is set on the basis of the LKA front wheel target rudder angle correction value θfLKA_FR.

After the steps S403, S404, S405, and S406, the ECU 100 calculates a LKA target assist torque TLK in accordance with the following equation (5) (step S407). The EPS control in the second embodiment is different from the first embodiment only in the LKA target assist torque TLK, so that the illustration thereof will be omitted. Incidentally, the LKA target assist torque TLK in the embodiment is one example of the "second control target value" of the present invention and one example of the "target assist torque".

$$TLK=T1+T2+T3+T4 \cdots (5)$$

Now, with reference to FIG. 12 to FIG. 15 as occasion demands, the respective characteristics of the correction torques will be explained. FIG. 12 is a schematic diagram showing a relation between the inertia correction torque T1 and the angular acceleration of the steered wheels. FIG. 13 is a schematic diagram showing a relation between the viscosity correction torque T2 and the angular velocity of the steered wheels. FIG. 14 is a schematic diagram showing a relation between the friction correction torque T3 and the angular acceleration of the steered wheels. FIG. 15 is a schematic diagram showing a relation between the axial force correction torque T4 and the LKA front wheel target rudder angle correction value θfLKA_FR.

In FIG. 12, the vertical axis shows the inertia correction torque T1, and the horizontal axis shows the angular acceleration of the steered wheels θLKA_FR" (incidentally, " denotes a second-order differential process). As shown in FIG. 12, the inertia correction torque T1 has a symmetrical characteristic between upon right turning and upon left turning and has such a characteristic that it linearly increases with respect to θLKA_FR", except for a dead-band region near θLKA_FR"=0 and a saturated region.

In FIG. 13, the vertical axis shows the viscosity correction torque T2, and the horizontal axis shows the angular velocity of the steered wheels θLKA_FR' (incidentally, denotes a differential process). As shown in FIG. 13, the viscosity correction torque T2 has a symmetrical characteristic between upon right turning and upon left turning and has such a characteristic that it linearly increases with respect to θLKA_FR', except for a dead-band region near θLKA_FR'=0 and a saturated region.

In FIG. 14, the vertical axis shows the friction correction torque T3, and the horizontal axis shows the angular velocity of the steered wheels θLKA_FR'. As shown in FIG. 14, the friction correction torque T3 has a symmetrical characteristic between upon right turning and upon left turning and has such a characteristic that it takes a constant value with respect to θLKA_FR', except for a dead-band region near θLKA_FR'=0.

In FIG. 15, the vertical axis shows the axial force correction torque T4, and the horizontal axis shows the LKA front wheel target rudder angle correction value θfLKA_FR. As shown in FIG. 15, the axial force correction torque T4 has a symmetrical characteristic between upon right turning and upon left turning and has such a characteristic that it linearly increases with respect to θfLKA_FR, except for a dead-band region near θfLKA_FR=0 and a saturated region.

Moreover, FIG. 15 illustrates, as one example, the characteristics of the axial force correction torque T4 with respect to the vehicle speeds V1, V2 (V2>V1) and V3 (V3>V2) in a solid line, a dashed line, and an alternate long and short line, respectively. As shown in FIG. 15, the axial force correction torque T4 is set to be higher with an increase in the vehicle speed if the LKA front wheel target rudder angle correction value θfLKA_FR is constant.

Incidentally, the ROM of the ECU 100 stores therein correction torque maps which quantify the relations shown in FIG. 12 to FIG. 15 in advance, and an appropriate value is selected from each of the axial force correction torque maps in respective one of the steps described above. As explained above, according to the second embodiment, the rudder angle of the front wheels as the steered wheels is controlled to be the LKA front wheel target rudder angle θLKA_FR by performing the rudder angle control the by the VGRS actuator 200, and thus it is possible to preferably make the vehicle 10 follow the target driving route. On the other hand, the reaction torque generated in the steering wheel 11 in this type of rudder angle control is reduced and ideally cancelled because the various correction torques T1 to T4 are outputted from the EPS actuator 400, wherein the various correction torques T1 to T4 are composed of the components corresponding to the inertia, viscosity and friction of the lower arm shaft 13 as a steering system, the components corresponding to the inertia, viscosity and friction of the EPS actuator 400, and the component for correcting the axial force of the steered wheels which takes the vehicle motion into account. Thus, the driver does not necessarily have to hold the steering wheel 11 during the LKA control period, and even if holding it, the driver does not feel deterioration in steering feeling due to the reaction torque. Therefore, it does not cause the excessive steering operation to the steering wheel 11, and it is possible to keep the behavior of the vehicle 10 stable.

Incidentally, in the embodiment, the rudder angle of the steered wheels is treated as being equivalent to the LKA front wheel target rudder angle θLKA_FR which is the target value of the rudder angle. They have a time lag caused by the transmission characteristic of the VGRS actuator 200 and a communication speed between the ECU 100 and another apparatus. In view of the time lag, as the rudder angle when the various correction torque T1 to T4 are calculated, using θLKA_FR as the target value is reasonable and practical. However, it a rudder angle sensor or the like for directly detecting the rudder angle is provided, of course, the aforementioned correction torque may be calculated on the basis of the rudder angle of the steered wheels, and in this case, there is obviously no problem in practice.

<Third Embodiment>

Next, a third embodiment of the present invention will be explained. Firstly, with reference to FIG. 16, the structure of a vehicle 30 in the embodiment will be explained. FIG. 16 is a schematic configuration diagram conceptually showing the basic structure of the vehicle 30. Incidentally, in FIG. 16, the overlap points with FIG. 1 will carry the same reference numerals, and the explanation thereof will be omitted as occasion demands.

In FIG. 16, the vehicle 30 is different from the vehicle 10 in the first and second embodiment in that the vehicle 30 does not have the VGRS actuator 200 for varying a relation between the steering angle MA of the steering wheel 11 and the rudder angle of the front wheels and its associated equipment, but instead, the vehicle 30 is provided with an ARS 600 for allowing the steering of rear wheels RL and RR. In other words, in the embodiment, the rear wheels function as the "steered wheels" of the present invention. However, the front wheels are obviously coupled with the steering wheel 11, and in the normal sense, the front wheels are of course the steered wheels.

The ARS 600 is provided with: a not-illustrated power cylinder; and an actuator for applying a reciprocation driving force in the horizontal direction in FIG. 16 to the power cylinder. The ARS 600 can drive a rear steering rod 31, which is coupled with the both ends of the power cylinder, in the horizontal direction by a predetermined amount by using the driving force applied from the actuator, thereby changing the rudder angle of the rear wheels. Incidentally, the vehicle structure for allowing the steering of the rear wheels may adopt known various aspects without being limited to the illustrated one.

In the vehicle 30, the LKA control is performed by the ECU 100. Now, with reference to FIG. 17, the details of the LKA control in the third embodiment will be explained. FIG. 17 is a flowchart showing the LKA control in the third embodiment. Incidentally, in FIG. 17, the overlap points with FIG. 2 will carry the same reference numerals, and the explanation thereof will be omitted as occasiodn demands.

In FIG. 17, if calculating the target lateral acceleration GYTG, the ECU 100 calculates a LKA rear wheel target rudder angle θLKA_RR on the basis of the calculated target lateral acceleration GYTG (step S601) and stores it (step S602). Now with reference to FIG. 18, an explanation will be given on a relation between the target lateral acceleration GYTG and the LKA rear wheel target rudder angle θLKA_RR. FIG. 18 is a schematic diagram showing the relation between the LKA rear wheel target rudder angle θLKA_RR and the target lateral acceleration GYTG.

In FIG. 18, the LKA rear wheel target rudder angle θLKA_RR has the same characteristics between upon left turning and upon right turning, and it is an increasing function, which basically increases linearly to the target lateral acceleration GYTG, except for the deadband region near the target lateral acceleration GYTG=0. However, the steering direction of the rear wheels is reversed-phase with respect to that of the front wheels, and the LKA rear wheel target rudder angle θLKA_RR is set into a right or clockwise (left or counterclockwise) steering direction upon left (right) turning, as opposed to the LKA front wheel target rudder angle θLKA_FR.

Moreover, FIG. 18 illustrates, as one example, the characteristics of the LKA rear wheel target rudder angle θLKA_RR with respect to the vehicle speeds V1, V2 (V2>V1) and V3 (V3>V2) in a solid line, a dashed line, and an alternate long and short line, respectively. As shown in FIG. 18, the LKA rear wheel target rudder angle θLKA_RR is set to be smaller with an increase in the vehicle speed if the target lateral acceleration GYTG is constant. This is because the lateral acceleration with respect to the rudder angle increases with an increase in the vehicle speed, as in the front steering.

Incidentally, the ROM of the ECU 100 stores therein a LKA rear wheel target rudder angle map which quantifies the relation shown in FIG. 18 in advance, and an appropriate value is selected from the LKA rear wheel target rudder angle map in the step S601. Incidentally, if a relation between the steering direction of the rear wheels and the steering direction of the front wheels changes between in-phase and reversed-phase depending on the vehicle speed, matching one of the relations in FIG. 10 and FIG. 18 may be referred to.

Back in FIG. 17, the ECU 100 calculates an axial force correction torque T5 for correcting a reaction torque caused by an axial force from the rear wheels on the basis of the LKA rear wheel target rudder angle θLKA_RR (step S603) and sets the axial force correction torque T5 as the LKA target assist torque TLK (step S604). Incidentally, the axial force from the rear wheels also reaches the steering wheel 11 after a time point at which the rear wheels are steered from the viewpoint of the structure of the vehicle 10, as in the front wheels. Therefore, if the axial force correction torque T5 is not determined in view of this type of vehicle motion, the axial force correction torque T5 will be excessive or insufficient to the axial force component to be canceled, and it cannot necessarily reduce the reaction torque sufficiently. Thus, when calculating the axial force correction torque T5, the ECU 100 performs a filter process which takes the time reaction into account, on the LKA rear wheel target rudder angle θLKA_RR, thereby calculating a LKA rear wheel target rudder angle correction value θfLKA_RR. The axial force correction torque T5 is set on the basis of the LKA rear wheel target rudder angle correction value θfLKA_RR.

Now, with reference to FIG. 19, an explanation will be given on a relation between the axial force correction torque T5 and the LKA rear wheel target rudder angle correction value θfLKA_RR. FIG. 19 is a schematic diagram showing the relation between the axial force correction torque T5 and the LKA rear wheel target rudder angle correction value θfLKA_RR. Incidentally, in FIG. 19, the overlap points with FIG. 15 will carry the same reference numerals, and the explanation thereof will be omitted as occasion demands.

In FIG. 19, the vertical axis shows the axial force correction torque T5, and the horizontal axis shows the LKA rear wheel target rudder angle correction value θfLKA_RR. As shown in FIG. 19, the axial force correction torque T5 has a symmetrical characteristic between upon right turning and upon left turning and has such a characteristic that it linearly increases with respect to θfLKA_RR, except for a dead-band region near θfLKA_RR=0 and a saturated region. However, as described above, the steering direction of the rear wheels is opposite to the turning direction of the vehicle, and the axial force correction torque T5 also has a symmetrical characteristic to that of the axial force correction torque T4.

Moreover, FIG. 19 illustrates, as one example, the characteristics of the axial force correction torque T5 with respect to the vehicle speeds V1, V2 (V2>V1) and V3 (V3>V2) in a solid line, a dashed line, and an alternate long and short line, respectively. As shown in FIG. 19, the axial force correction torque T5 is set to be higher with an increase in the vehicle speed if the LKA rear wheel target rudder angle correction value θfLKA_RR is constant. This is because the lateral acceleration increases with an increase in the vehicle speed if the rudder angle is constant.

Incidentally, the ROM of the ECU 100 stores therein an axial force correction torque map which quantifies the relations shown in FIG. 18 in advance, and an appropriate value is selected from the axial force correction torque map in the step S603.

As explained above, according to the third embodiment, even if the rudder angle control of the rear wheels is used to the following for the target driving route, it is possible to preferably perform the following for the target driving route while suppressing the destabilization of the vehicle behavior by cancelling the reaction torque acting on the steering shaft 11.

Incidentally, the vehicle structures in the first and second embodiment and the vehicle structure in the third embodiment are not incompatible. For example, the second embodiment and the third embodiment may be combined, thereby performing the following for the target driving route by the rudder angle control of the front and rear wheels. In other words, in this case, both the axial force correction torques T4 and T5 may be reflected in the LKA target assist torque TLK.

The present invention is limited to the aforementioned embodiments, which can be read from the claims and the entire specification. A steering support apparatus of a vehicle, which involves such changes, is also intended to be within the technical scope of the present invention.

## Industrial Applicability

The present invention can be used to, for example, a steering support apparatus of a vehicle for making a vehicle follow a target driving route.

## Claims

1. A driving support apparatus of a vehicle, the vehicle comprising:

   a steering torque assisting device capable of assisting a steering torque applied to a steering input shaft via a steering wheel; and
   a rudder angle varying device capable of varying a relation between a steering angle as a rotation angle of the steering input shaft and a rudder angle as a rotation angle of steered wheels by relatively rotating a steering output shaft coupled with the steered wheels with respect to the steering input shaft,
   said driving support apparatus comprising:

      a first setting device for setting a first control target value corresponding to one of the steering torque assisting device and the rudder angle varying device, to make the vehicle follow a target driving route;
      a first controlling device for controlling the one device on the basis of the set first control target value;
      a second setting device for setting a second control target value corresponding to the other device of the steering torque assisting device and the rudder angle varying device so as to suppress a change in behavior of the vehicle caused when the vehicle is made follow the target driving route due to the control on the basis of said set first control target of the one device; and
      a second controlling device for controlling the other device on the basis of the set second control target value,
      said first setting device sets a target assist torque as the first control target value,
      said first controlling device controls the steering torque assisting device on the basis of the set target assist torque,
      said second setting device sets a steering transmission ratio for defining a rotation angle of the steering output shaft with respect to the steering angle so as to reduce the steering transmission ratio in comparison with when following for the target driving route is not performed, as the second control target value, and
      said second controlling device controls the rudder angle varying device on the basis of the set steering transmission ratio.

2. The driving support apparatus of the vehicle according to claim 1, wherein
   said first setting device sets a target assist torque as the first control target value,
   said first controlling device controls the steering torque assisting device on the basis of the set target assist torque,
   said second setting device sets a target relative rotation angle of the steering output shaft with respect to the steering input shaft so as to reduce the steering angle required to make the vehicle follow the target driving route, as the second control target value, and said second controlling device controls the rudder angel varying device on the basis of the set target relative rotation angle.

3. The driving support apparatus of the vehicle according to claim 2, wherein said second setting device sets the target relative rotation angle in accordance with a driving condition of the vehicle.

4. The driving support apparatus of the vehicle according to claim 3, wherein said second setting device sets the target relative rotation angle so as to reduce amount of reduction in the steering angle with an increase in curvature of the target driving route.

5. The driving support apparatus of the vehicle according to claim 3, wherein said second setting device sets the target relative rotation angle so as to reduce amount of reduction in the steering angle with an increase in speed of the vehicle.

6. A driving support apparatus of a vehicle, the vehicle comprising:

   a steering torque assisting device capable of assisting a steering torque applied to a steering input shaft via a steering wheel; and
   a rudder angle varying device capable of varying a relation between a steering angle as a rotation angle of the steering input shaft and a rudder angle as a rotation angle of steered wheels by relatively rotating a steering output shaft coupled with the steered wheels with respect to the steering input shaft,
   said driving support apparatus comprising:

      a first setting device for setting a first control target value corresponding to one of the steering torque assisting device and the rudder angle varying device, to make the vehicle follow a target driving route;
      a first controlling device for controlling the one device on the basis of the set first control target value;
      a second setting device for setting a second control target value corresponding to the other device of the steering torque assisting device and the rudder angle varying device so as to suppress a change in behavior of the vehicle caused when the vehicle is made follow the target driving route due to the control on the basis of said first control target value of the one device; and
a second controlling device for controlling the other device on the basis of the set second control target value,
said first setting device sets a target rudder angle as the first control target value and sets a steering transmission ratio for defining a rotation angle of the steering output shaft with respect to the steering angle so as to be reduced in comparison with when following for the target driving route is not performed,
said first controlling device controls the rudder angle varying device on the basis of the set target rudder angle,
said second setting device sets a target assist torque so as to cancel a reaction torque applied to the steering wheels with the control of the rudder angle varying device based on the target rudder angle, as the second control target value, and
said second controlling device controls the steering torque assisting device on the basis of the set target assist torque.

**7.** The driving support apparatus of the vehicle according to claim 6, wherein the steered wheels are front wheels which are coupled with the steering input shaft via a steering output shaft, and
said second setting device sets the target assist torque so as to cancel at least one portion of a first portion reaction torque caused by motion of the steering output shaft, a second portion reaction torque caused by motion of the steering torque assisting device, and a third portion reaction torque caused by an axial force from the steered wheels.

**8.** The driving support apparatus of the vehicle according to claim 7, wherein said second setting device sets the target assist torque corresponding to the first portion reaction torque so as to include (1) a first inertia correction term which has the same sign as that of angular acceleration of the steered wheels and which corrects an influence of inertia of the steering output shaft, (2) a first viscosity correction term which has the same sign as that of angular velocity of the steered wheels and which corrects an influence of viscosity of the steering output shaft, and (3) a first friction correction term which has the same sign as that of angular velocity of the steered wheels and which corrects an influence of friction of the steering output shaft.

**9.** The driving support apparatus of the vehicle according to claim 7, wherein said second setting device sets the target assist torque corresponding to the second portion reaction torque so as to include (1) a second inertia correction term which has the same sign as that of angular acceleration of the steered wheels and which corrects an influence of inertia of the steering torque assisting device, (2) a second viscosity correction term which has the same sign as that of angular velocity of the steered wheels and which corrects an influence of viscosity of the steering torque assisting device, and (3) a second friction correction term which has the same sign as that of angular velocity of the steered wheels and which corrects an influence of friction of the steering torque assisting device.

**10.** The driving support apparatus of the vehicle according to claim 7, wherein said second setting device sets the target assist torque corresponding to the third portion reaction torque so as to take into account a response delay of the axial force and to have the same sign as that of the rudder angle.

**11.** The driving support apparatus of the vehicle according to claim 6, wherein
the steered wheels are rear wheels which are not coupled with the steering input shaft, and
said second setting device sets the target assist torque having a different sign from that of the rudder angle so as to cancel a reaction torque caused by an axial force from the steered wheels in view of a response delay of the axial force.

## Patentansprüche

**1.** Fahrunterstützungsvorrichtung eines Fahrzeugs, wobei das Fahrzeug aufweist:

eine Lenkmomentunterstützungsvorrichtung, die in der Lage ist, ein Lenkmoment, das über ein Lenkrad auf eine Lenkeingangswelle ausgeübt wird, zu unterstützen; und
eine Ruderwinkeländerungsvorrichtung, die in der Lage ist, eine Beziehung zwischen einem Lenkwinkel als einem Drehwinkel der Lenkeingangswelle und einem Ruderwinkel als einem Drehwinkel von gelenkten Rädern durch relatives Drehen einer Lenkausgangswelle, die mit den gelenkten Rädern gekoppelt ist, in Bezug auf die Lenkeingangswelle zu ändern,
wobei die Fahrunterstützungsvorrichtung aufweist:

eine erste Einstellvorrichtung zum Einstellen eines ersten Steuersollwertes entsprechend einer Vorrichtung aus der Lenkmomentunterstützungsvorrichtung und der Ruderwinkeländerungsvorrichtung, um zu bewirken, dass das Fahrzeug einer Sollfahrroute folgt;
eine erste Steuerungsvorrichtung zum Steuern der einen Vorrichtung auf der Grundlage des eingestellten ersten Steuersollwertes;
eine zweite Einstellvorrichtung zum Einstellen eines zweiten Steuersollwertes entsprechend der anderen Vorrichtung aus der Lenkmomentunterstützungsvorrichtung und der Ruderwinkeländerungsvorrichtung, um eine Verhaltensänderung des Fahrzeugs zu verhindern, die bewirkt wird, wenn aufgrund der Steuerung auf der Grundlage des eingestellten ersten Steuersolls der einen Vorrichtung veranlasst wird, dass das Fahrzeug der Sollfahrroute folgt; und
eine zweite Steuerungsvorrichtung zum Steuern der anderen Vorrichtung auf der Grundlage des eingestellten zweiten Steuersollwertes,
wobei die erste Einstellvorrichtung ein Sollunterstützungsmoment als den ersten Steuersollwert einstellt,
wobei die erste Steuerungsvorrichtung die Sollmomentunterstützungsvorrichtung auf der Grundlage des eingestellten Sollunterstützungsmomentes steuert,
wobei die zweite Einstellvorrichtung ein Lenkübersetzungsverhältnis zum Definieren eines Drehwinkels der Lenkausgangswelle in Bezug auf den Lenkwinkel als den zweiten Steuersollwert einstellt, um das Lenkübersetzungsverhältnis im Vergleich zu einem Fall zu verringern, in dem ein Folgen der Sollfahrroute nicht durchgeführt wird, und
wobei die zweite Steuerungsvorrichtung die Ruderwinkeländerungsvorrichtung auf der Grundlage des eingestellten Lenkübersetzungsverhältnisses steuert.

**2.** Fahrunterstützungsvorrichtung des Fahrzeugs nach Anspruch 1, wobei
die erste Einstellvorrichtung ein Sollunterstützungsmoment als den ersten Steuersollwert einstellt,
die erste Steuerungsvorrichtung die Lenkmomentunterstützungsvorrichtung auf der Grundlage des eingestellten Sollunterstützungsmomentes steuert,
die zweite Einstellvorrichtung einen Sollrelativdrehwinkel der Lenkausgangswelle in Bezug auf die Lenkeingangswelle als den zweiten Steuersollwert einstellt, um den Lenkwinkel zu verringern, der benötigt wird, um zu bewirken, dass das Fahrzeug der Sollfahrroute folgt, und
die zweite Steuerungsvorrichtung die Ruderwinkeländerungsvorrichtung auf der Grundlage des eingestellten Sollrelativdrehwinkels steuert.

**3.** Fahrunterstützungsvorrichtung des Fahrzeugs nach Anspruch 2, wobei die zweite Einstellvorrichtung den Sollrelativdrehwinkel entsprechend einer Fahrbedingung des Fahrzeugs einstellt.

**4.** Fahrunterstützungsvorrichtung des Fahrzeugs nach Anspruch 3, wobei die zweite Einstellvorrichtung den Sollrelativdrehwinkel einstellt, um eine Größe einer Verringerung des Lenkwinkels mit einer Erhöhung einer Krümmung der Sollfahrroute zu verringern.

**5.** Fahrunterstützungsvorrichtung des Fahrzeugs nach Anspruch 3, wobei die zweite Einstellvorrichtung den Sollrelativdrehwinkel einstellt, um eine Größe einer Verringerung des Lenkwinkels mit einer Erhöhung einer Geschwindigkeit des Fahrzeugs zu verringern.

**6.** Fahrunterstützungsvorrichtung eines Fahrzeugs, wobei das Fahrzeug aufweist:

eine Lenkmomentunterstützungsvorrichtung, die in der Lage ist, ein Lenkmoment, das über ein Lenkrad auf eine Lenkeingangswelle ausgeübt wird, zu unterstützen; und
eine Ruderwinkeländerungsvorrichtung, die in der Lage ist, eine Beziehung zwischen einem Lenkwinkel als einem Drehwinkel der Lenkeingangswelle und einem Ruderwinkel als einem Drehwinkel von gelenkten Rädern durch relatives Drehen einer Lenkausgangswelle, die mit den gelenkten Rädern gekoppelt ist, in Bezug auf die Lenkeingangswelle zu ändern,
wobei die Fahrunterstützungsvorrichtung aufweist:

eine erste Einstellvorrichtung zum Einstellen eines ersten Steuersollwertes entsprechend einer Vorrichtung aus der Lenkmomentunterstützungsvorrichtung und der Ruderwinkeländerungsvorrichtung, um zu bewirken, dass das Fahrzeug einer Sollfahrroute folgt;
eine erste Steuerungsvorrichtung zum Steuern der einen Vorrichtung auf der Grundlage des eingestellten ersten Steuersollwertes;
eine zweite Einstellvorrichtung zum Einstellen eines zweiten Steuersollwertes entsprechend der anderen Vorrichtung aus der Lenkmomentunterstützungsvorrichtung und der Ruderwinkeländerungsvorrichtung, um eine Verhaltensänderung des Fahrzeugs zu verhindern, die bewirkt wird, wenn aufgrund der Steuerung auf der Grundlage des ersten Steuersollwertes der einen Vorrichtung bewirkt wird, dass das Fahrzeug der Sollfahrroute folgt; und
eine zweite Steuerungsvorrichtung zum Steuern der anderen Vorrichtung auf der Grundlage des eingestellten zweiten Steuersollwertes,
wobei die erste Einstellvorrichtung einen Sollruderwinkel als den ersten Steuersollwert einstellt und ein Lenkübersetzungsverhältnis zum Definieren eines Drehwinkels der Lenkausgangswelle in Bezug auf den Lenkwinkel einstellt, so dass dieser im Vergleich zu einem Fall verringert wird, in dem ein Folgen der Sollfahrroute nicht durchgeführt wird,
wobei die erste Steuerungsvorrichtung die Ruderwinkeländerungsvorrichtung auf der Grundlage des eingestellten Sollruderwinkels steuert,
wobei die zweite Einstellvorrichtung ein Sollunterstützungsmoment als den zweiten Steuersollwert einstellt, um ein Reaktionsmoment, das mit der Steuerung der Ruderwinkeländerungsvorrichtung auf der Grundlage des Sollruderwinkels auf die Lenkräder ausgeübt wird, aufzuheben, und
wobei die zweite Steuerungsvorrichtung die Lenkmomentunterstützungsvorrichtung auf der Grundlage des eingestellten Sollunterstützungsmomentes steuert.

7. Fahrunterstützungsvorrichtung des Fahrzeugs nach Anspruch 6, wobei
die gelenkten Räder Vorderräder sind, die mit der Lenkeingangswelle über eine Lenkausgangswelle gekoppelt sind, und
die zweite Einstellvorrichtung das Sollunterstützungsmoment einstellt, um mindestens einen Teil aus einem ersten Teilreaktionsmoment, das durch eine Bewegung der Lenkausgangswelle bewirkt wird, einem zweiten Teilreaktionsmoment, das durch eine Bewegung der Lenkmomentunterstützungsvorrichtung bewirkt wird, und einem dritten Teilreaktionsmoment, das durch eine axiale Kraft von den gelenkten Rädern bewirkt wird, aufzuheben.

8. Fahrunterstützungsvorrichtung des Fahrzeugs nach Anspruch 7, wobei die zweite Einstellvorrichtung das Sollunterstützungsmoment entsprechend dem ersten Teilreaktionsmoment einstellt, so dass (1) ein erster Trägheitskorrekturausdruck, der dasselbe Vorzeichen wie eine Winkelbeschleunigung der gelenkten Räder aufweist und einen Einfluss einer Trägheit der Lenkausgangswelle korrigiert, (2) ein erster Viskositätskorrekturausdruck, der dasselbe Vorzeichen wie die Winkelgeschwindigkeit der gelenkten Räder aufweist und einen Einfluss einer Viskosität der Lenkausgangswelle korrigiert, und (3) ein erster Reibungskorrekturausdruck enthalten ist, der dasselbe Vorzeichen wie die Winkelgeschwindigkeit der gelenkten Räder aufweist und einen Einfluss einer Reibung der Lenkausgangswelle korrigiert.

9. Fahrunterstützungsvorrichtung des Fahrzeugs nach Anspruch 7, wobei die zweite Einstellvorrichtung das Sollunterstützungsmoment entsprechend dem zweiten Teilreaktionsmoment einstellt, so dass (1) ein zweiter Trägheitskorrekturausdruck, der dasselbe Vorzeichen wie eine Winkelbeschleunigung der gelenkten Räder aufweist und einen Einfluss einer Trägheit der Lenkmomentunterstützungsvorrichtung korrigiert, (2) ein zweiter Viskositätskorrekturausdruck, der dasselbe Vorzeichen wie eine Winkelgeschwindigkeit der gelenkten Räder aufweist und einen Einfluss einer Viskosität der Lenkmomentunterstützungsvorrichtung korrigiert, und (3) ein zweiter Reibungskorrekturausdruck enthalten ist, der dasselbe Vorzeichen wie die Winkelgeschwindigkeit der gelenkten Räder aufweist und einen Einfluss einer Reibung der Lenkmomentunterstützungsvorrichtung korrigiert.

10. Fahrunterstützungsvorrichtung des Fahrzeugs nach Anspruch 7, wobei die zweite Einstellvorrichtung das Sollunterstützungsmoment entsprechend dem dritten Teilreaktionsmoment einstellt, so dass eine Antwortverzögerung der axialen Kraft berücksichtigt wird und dieses dasselbe Vorzeichen wie der Ruderwinkel aufweist.

11. Fahrunterstützungsvorrichtung des Fahrzeugs nach Anspruch 6, wobei
die gelenkten Räder Hinterräder sind, die nicht mit der Lenkeingangswelle gekoppelt sind, und
die zweite Einstellvorrichtung das Sollunterstützungsmoment einstellt, das ein anderes Vorzeichen als der Ruderwinkel aufweist, um ein Reaktionsmoment, das durch eine axiale Kraft von den gelenkten Rädern bewirkt wird, im Hinblick auf eine Antwortverzögerung der axialen Kraft aufzuheben.

## Revendications

1. Appareil d'aide à la conduite d'un véhicule, le véhicule comprenant :

un dispositif d'assistance du couple de direction apte à assister un couple de direction appliqué à un arbre d'entrée de direction par l'intermédiaire d'un volant de direction ; et
un dispositif de variation de l'angle de gouverne apte à faire varier la relation entre l'angle de braquage en tant qu'angle de rotation de l'arbre d'entrée de direction et l'angle de gouverne en tant qu'angle de rotation des roues directrices en opérant une rotation relative d'un arbre de sortie de direction couplé aux roues directrices par rapport à l'arbre d'entrée de direction,

ledit appareil d'aide à la conduite comprenant :

un premier dispositif de réglage destiné à établir une première valeur cible de commande correspondant à l'un du dispositif d'assistance du couple de direction et du dispositif de variation de l'angle de gouverne, pour amener le véhicule à suivre une trajectoire de conduite cible ;
un premier dispositif de commande destiné à commander ledit dispositif sur la base de la première valeur cible de commande établie ;
un second dispositif de réglage destiné à établir une seconde valeur cible de commande correspondant à l'autre dispositif du dispositif d'assistance du couple de direction et du dispositif de variation de l'angle de gouverne de manière à supprimer le changement de comportement du véhicule qui se produit lorsque le véhicule est amené à suivre la trajectoire de conduite cible en raison de la commande, sur la base de ladite première valeur cible de commande établie, du premier dispositif ; et
un second dispositif de commande destiné à commander l'autre dispositif sur la base de la seconde valeur cible de commande établie,
ledit premier dispositif de réglage établit un couple d'assistance cible en tant que première valeur cible de commande,
ledit premier dispositif de commande commande le dispositif d'assistance du couple de direction sur la base du couple d'assistance cible établi,
ledit second dispositif de réglage établit un rapport de transmission de direction pour définir l'angle de rotation de l'arbre de sortie de direction par rapport à l'angle de braquage de manière à réduire le rapport de transmission de direction en comparaison avec le cas où il n'y a pas de suivi de la trajectoire cible, en tant que seconde valeur cible de commande, et
ledit second dispositif de commande commande le dispositif de variation de l'angle de gouverne sur la base du rapport de transmission de direction établi.

**2.** Appareil d'aide à la conduite d'un véhicule selon la revendication 1, dans lequel
ledit premier dispositif de réglage établit un couple d'assistance cible en tant que première valeur cible de commande,
ledit premier dispositif de commande commande le dispositif d'assistance du couple de direction sur la base du couple d'assistance cible établi,
ledit second dispositif de réglage établit un angle de rotation relative cible de l'arbre de sortie de direction par rapport à l'arbre d'entrée de direction de manière à réduire l'angle de braquage nécessaire pour amener le véhicule à suivre la trajectoire de conduite cible, en tant que seconde valeur cible de commande, et
ledit second dispositif de commande commande le dispositif de variation de l'angle de gouverne sur la base de l'angle de rotation relative cible établi.

**3.** Appareil d'aide à la conduite d'un véhicule selon la revendication 2, dans lequel ledit second dispositif de réglage établit l'angle de rotation relative cible en fonction de la conduite du véhicule.

**4.** Appareil d'aide à la conduite d'un véhicule selon la revendication 3, dans lequel ledit second dispositif de réglage établit l'angle de rotation relative cible de manière à réduire l'ampleur de la réduction de l'angle de braquage lorsque la courbure de la trajectoire de conduite cible augmente.

**5.** Appareil d'aide à la conduite d'un véhicule selon la revendication 4, dans lequel ledit second dispositif de réglage établit l'angle de rotation relative cible de manière à réduire l'ampleur de la réduction de l'angle de braquage lorsque la vitesse du véhicule augmente.

**6.** Appareil d'aide à la conduite d'un véhicule, le véhicule comprenant :

un dispositif d'assistance du couple de direction apte à assister un couple de direction appliqué à un arbre d'entrée de direction par l'intermédiaire d'un volant de direction ; et
un dispositif de variation de l'angle de gouverne apte à faire varier la relation entre l'angle de braquage en tant qu'angle de rotation de l'arbre d'entrée de direction et l'angle de gouverne en tant qu'angle de rotation des roues directrices en opérant une rotation relative de l'arbre de sortie de direction couplé aux roues directrices par rapport à l'arbre d'entrée de direction,
ledit appareil d'aide à la conduite comprenant :

un premier dispositif de réglage destiné à établir une première valeur cible de commande correspondant à l'un du dispositif d'assistance du couple de direction et du dispositif de variation de l'angle de gouverne, pour amener le véhicule à suivre une trajectoire de conduite cible ;
un premier dispositif de commande destiné à commander ledit dispositif sur la base de la première valeur cible de commande établie ;

un second dispositif de réglage destiné à établir une seconde valeur cible de commande correspondant à l'autre dispositif du dispositif d'assistance du couple de direction et du dispositif de variation de l'angle de gouverne de manière à supprimer le changement de comportement du véhicule qui se produit lorsque le véhicule est amené à suivre la trajectoire de conduite cible en raison de la commande, sur la base de ladite première valeur cible de commande établie, dudit dispositif ; et

un second dispositif de commande destiné à commander l'autre dispositif sur la base de la seconde valeur cible de commande établie,

ledit premier dispositif de réglage établit un angle de gouverne cible en tant que première valeur cible de commande et établit un rapport de transmission de direction pour définir l'angle de rotation de l'arbre de sortie de direction par rapport à l'angle de braquage de manière à le réduire par rapport au cas où il n'y a pas de suivi de la trajectoire cible,

ledit premier dispositif de commande commande le dispositif de variation de l'angle de gouverne sur la base de l'angle de gouverne cible établi,

ledit second dispositif de réglage établit un couple d'assistance cible de manière à annuler un couple de réaction appliqué aux roues directrices avec la commande du dispositif de variation de l'angle de gouverne basé sur l'angle de gouverne cible, en tant que seconde valeur cible de commande, et ledit second dispositif de commande commande le dispositif d'assistance du couple de direction sur la base du couple d'assistance cible établi.

**7.** Appareil d'aide à la conduite d'un véhicule selon la revendication 6, dans lequel
les roues directrices sont des roues avant qui sont couplées à l'arbre d'entrée de direction par l'intermédiaire d'un arbre de sortie de direction, et
ledit second dispositif de réglage établit le couple d'assistance cible de manière à annuler au moins une partie d'une première partie du couple de réaction engendrée par le mouvement de l'arbre de sortie de direction, d'une deuxième partie du couple de réaction engendrée par le mouvement du dispositif d'assistance du couple de direction, et d'une troisième partie du couple de réaction engendrée par une force axiale émanant des roues directrices.

**8.** Appareil d'aide à la conduite d'un véhicule selon la revendication 7, dans lequel ledit second dispositif de réglage établit le couple d'assistance cible correspondant à la première partie du couple de réaction de manière à inclure (1) un premier terme de correction de l'inertie qui a un signe identique à celui de l'accélération angulaire des roues directrices et qui corrige l'influence de l'inertie de l'arbre de sortie de direction, (2) un premier terme de correction de la viscosité qui a un signe identique à celui de la vitesse angulaire des roues directrices et qui corrige l'influence de la viscosité de l'arbre de sortie de direction, et (3) un premier terme de correction du frottement qui a un signe identique à celui de la vitesse angulaire des roues directrices et qui corrige l'influence du frottement de l'arbre de sortie de direction.

**9.** Appareil d'aide à la conduite d'un véhicule selon la revendication 8, dans lequel ledit second dispositif de réglage établit le couple d'assistance cible correspondant à la deuxième partie du couple de réaction de manière à inclure (1) un deuxième terme de correction de l'inertie qui a un signe identique à celui de l'accélération angulaire des roues directrices et qui corrige l'influence de l'inertie du dispositif d'assistance du couple de direction, (2) un deuxième terme de correction de la viscosité qui a un signe identique à celui de la vitesse angulaire des roues directrices et qui corrige l'influence de la viscosité du dispositif d'assistance du couple de direction, et (3) un deuxième terme de correction du frottement qui a un signe identique à celui de la vitesse angulaire des roues directrices et qui corrige l'influence du frottement du dispositif d'assistance du couple de direction.

**10.** Appareil d'aide à la conduite d'un véhicule selon la revendication 8, dans lequel ledit second dispositif de réglage établit le couple d'assistance cible correspondant à la troisième partie du couple de réaction de manière à prendre en compte le délai de réaction de la force axiale et à avoir un signe identique à celui de l'angle de gouverne.

**11.** Appareil d'aide à la conduite d'un véhicule selon la revendication 7, dans lequel
les roues directrices sont des roues arrière qui ne sont pas couplées à l'arbre d'entrée de direction, et
ledit second dispositif de réglage établit le couple d'assistance cible comme ayant un signe différent de celui de l'angle de gouverne de manière à annuler le couple de réaction engendré par une force axiale émanant des roues directrices compte tenu du délai de réaction de la force axiale.

[FIG. 1]

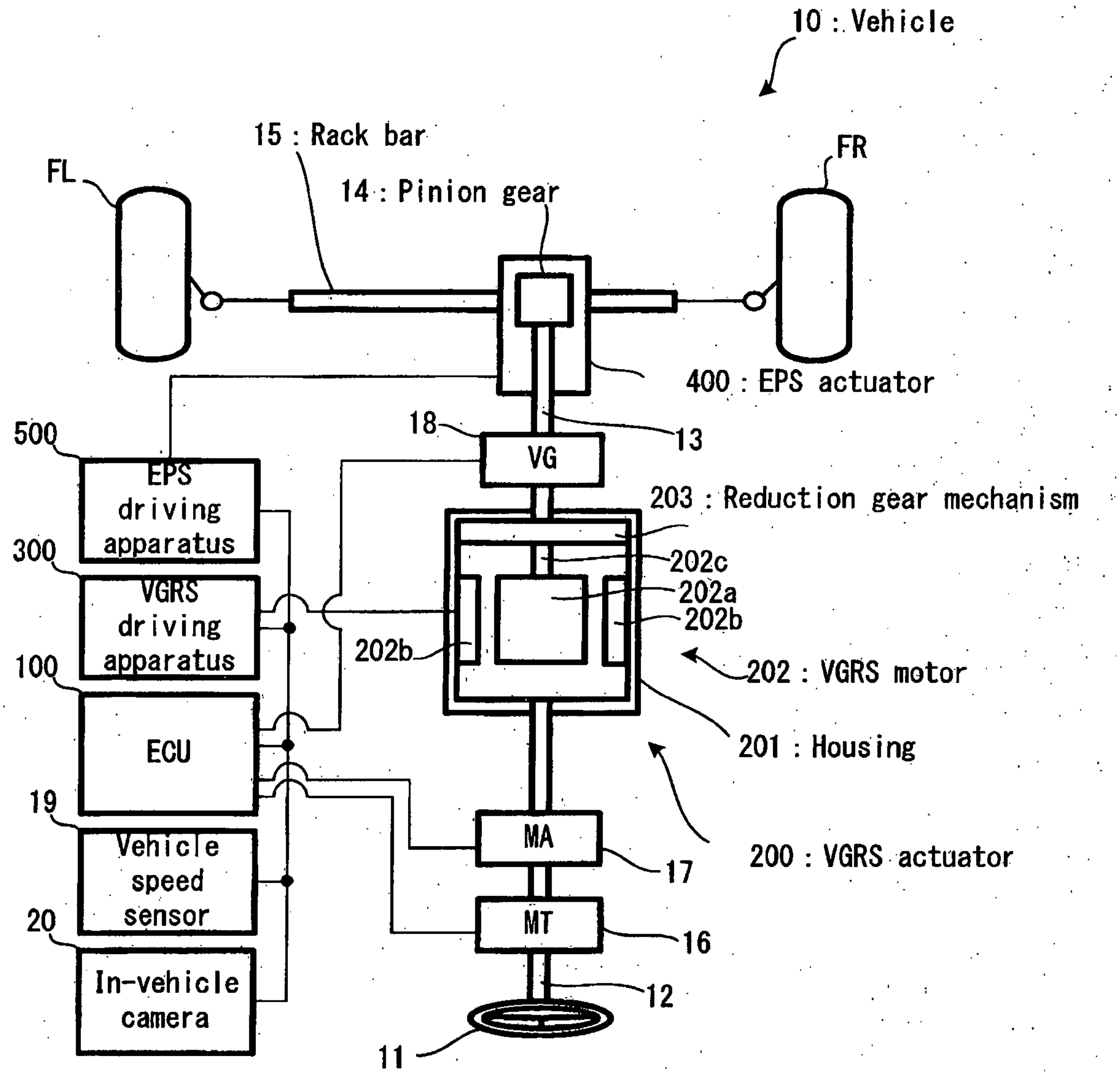
10 : Vehicle
15 : Rack bar
14 : Pinion gear
FL
FR
400 : EPS actuator
18
VG
13
500
EPS driving apparatus
203 : Reduction gear mechanism
202c
202a
202b
300
VGRS driving apparatus
202b
202 : VGRS motor
100
ECU
201 : Housing
19
Vehicle speed sensor
MA
17
200 : VGRS actuator
20
MT
16
In-vehicle camera
12
11

[FIG. 2]

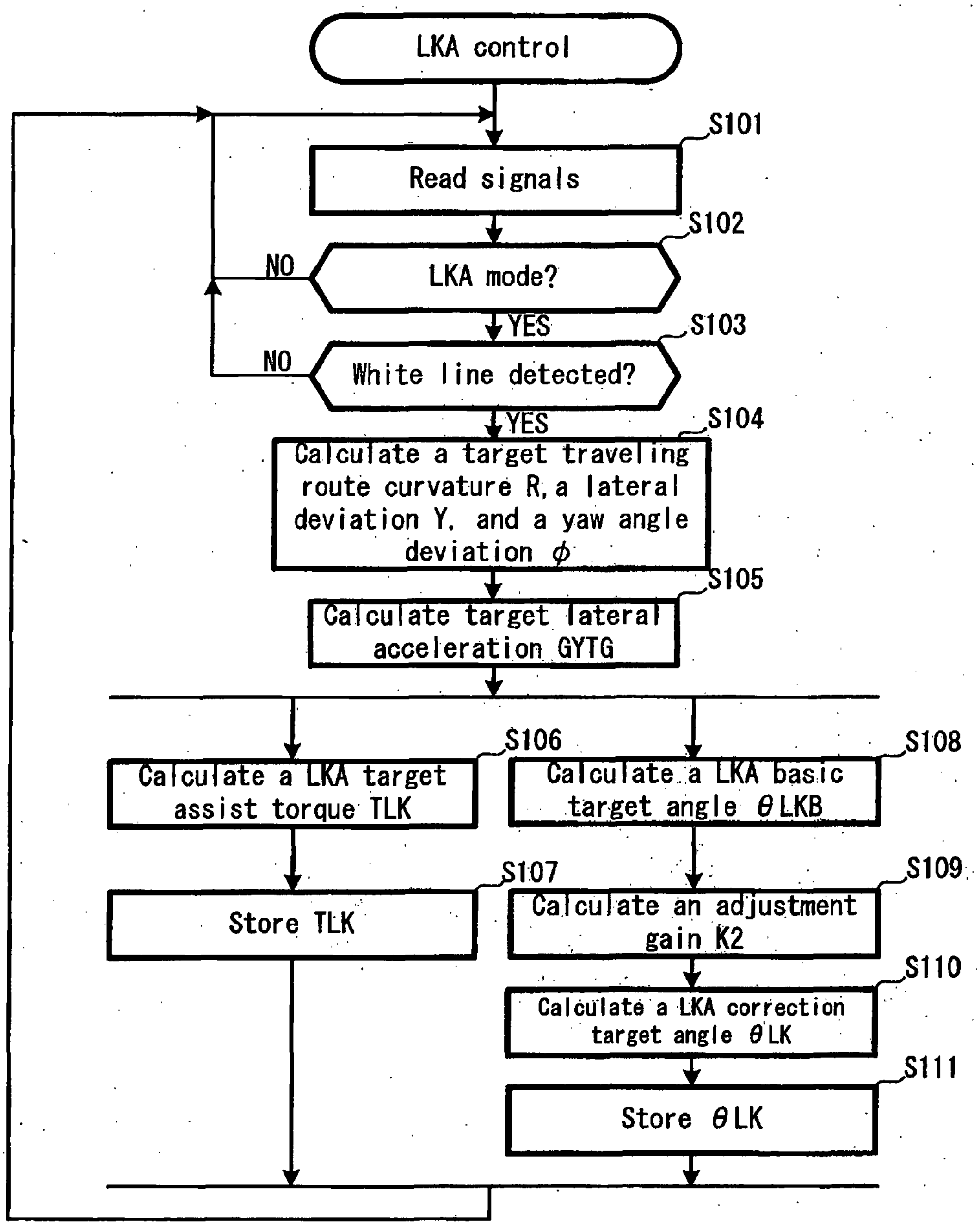
LKA control
S101
Read signals
S102
NO
LKA mode?
YES
S103
NO
White line detected?
YES
S104
Calculate a target traveling route curvature R, a lateral deviation Y, and a yaw angle deviation ϕ
S105
Calculate target lateral acceleration GYTG
S106
Calculate a LKA target assist torque TLK
S108
Calculate a LKA basic target angle θLKB
S107
Store TLK
S109
Calculate an adjustment gain K2
S110
Calculate a LKA correction target angle θLK
S111
Store θLK

[FIG. 3]

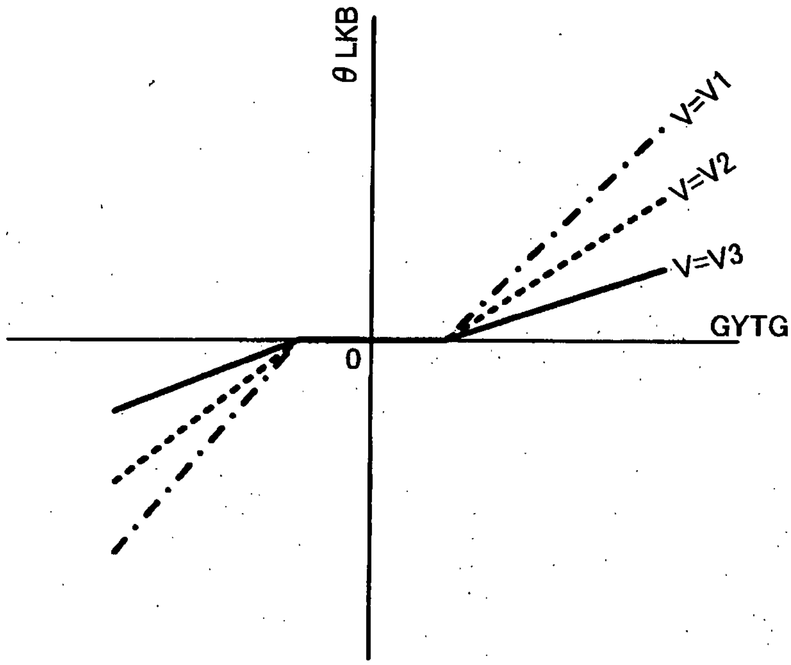


[FIG. 4]

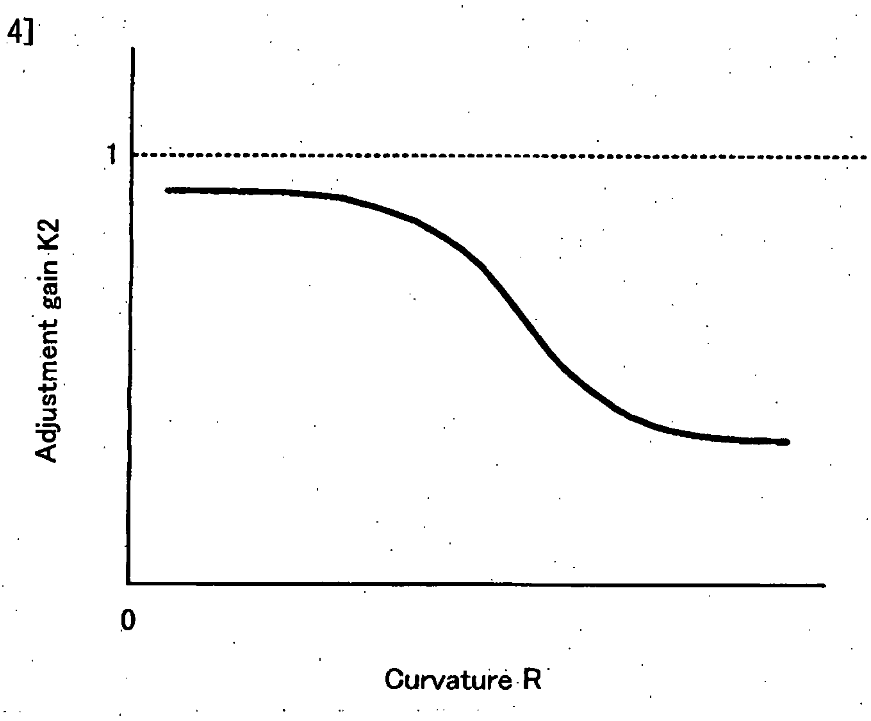

[FIG. 5]

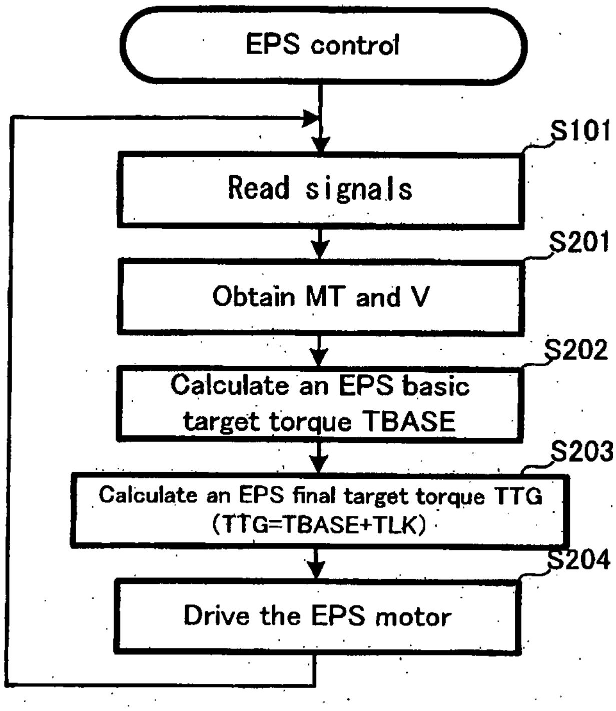
EPS control
S101
Read signals
S201
Obtain MT and V
S202
Calculate an EPS basic target torque TBASE
S203
Calculate an EPS final target torque TTG (TTG=TBASE+TLK)
S204
Drive the EPS motor

[FIG. 6]

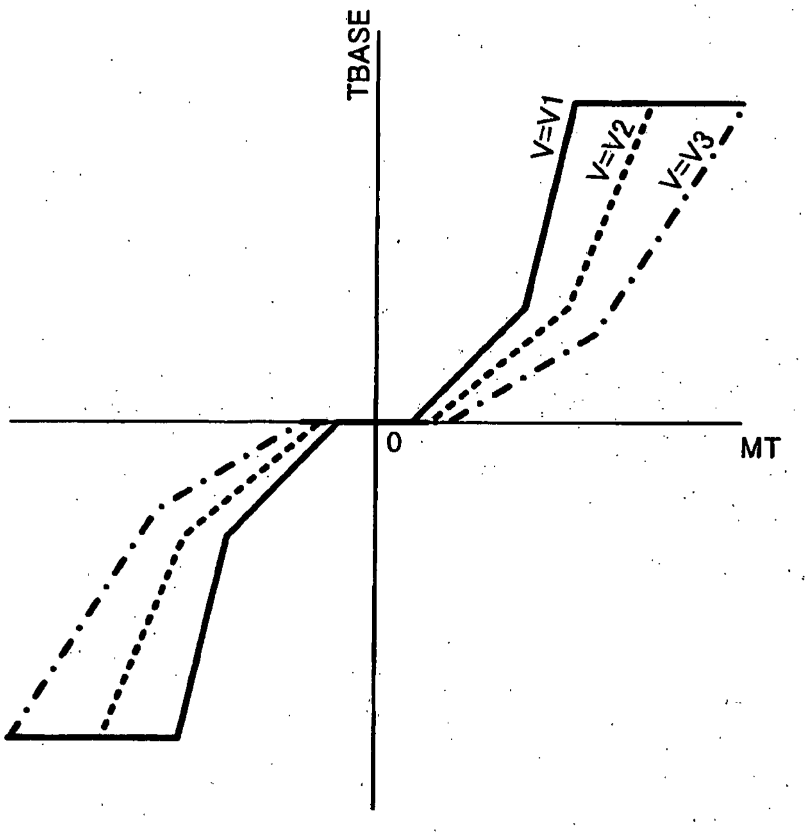

[FIG. 7]

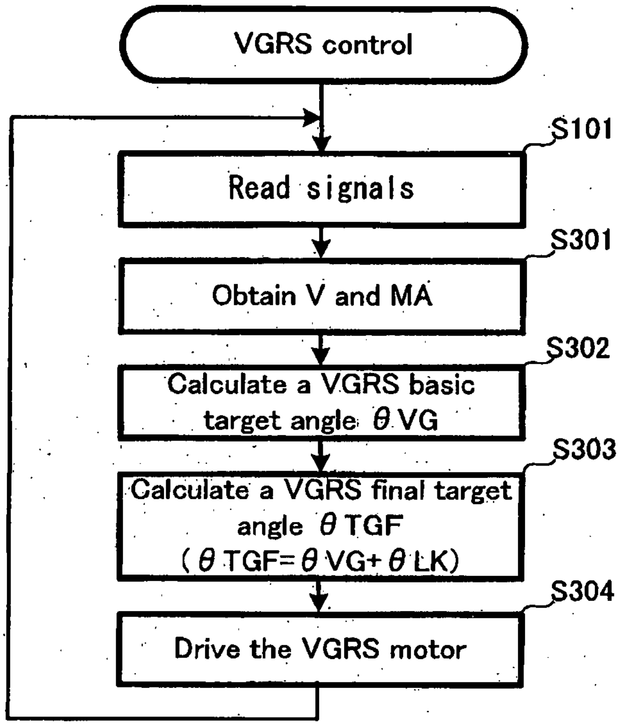
VGRS control
S101
Read signals
S301
Obtain V and MA
S302
Calculate a VGRS basic target angle θVG
S303
Calculate a VGRS final target angle θTGF (θTGF=θVG+θLK)
S304
Drive the VGRS motor

[FIG. 8]

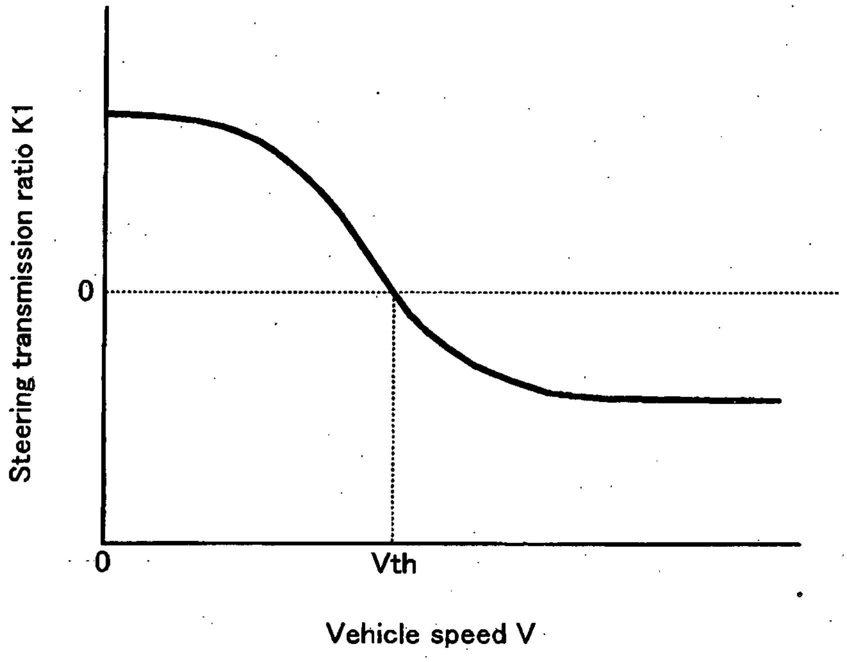
Steering transmission ratio K1
0
0
Vth
Vehicle speed V

[FIG. 9]

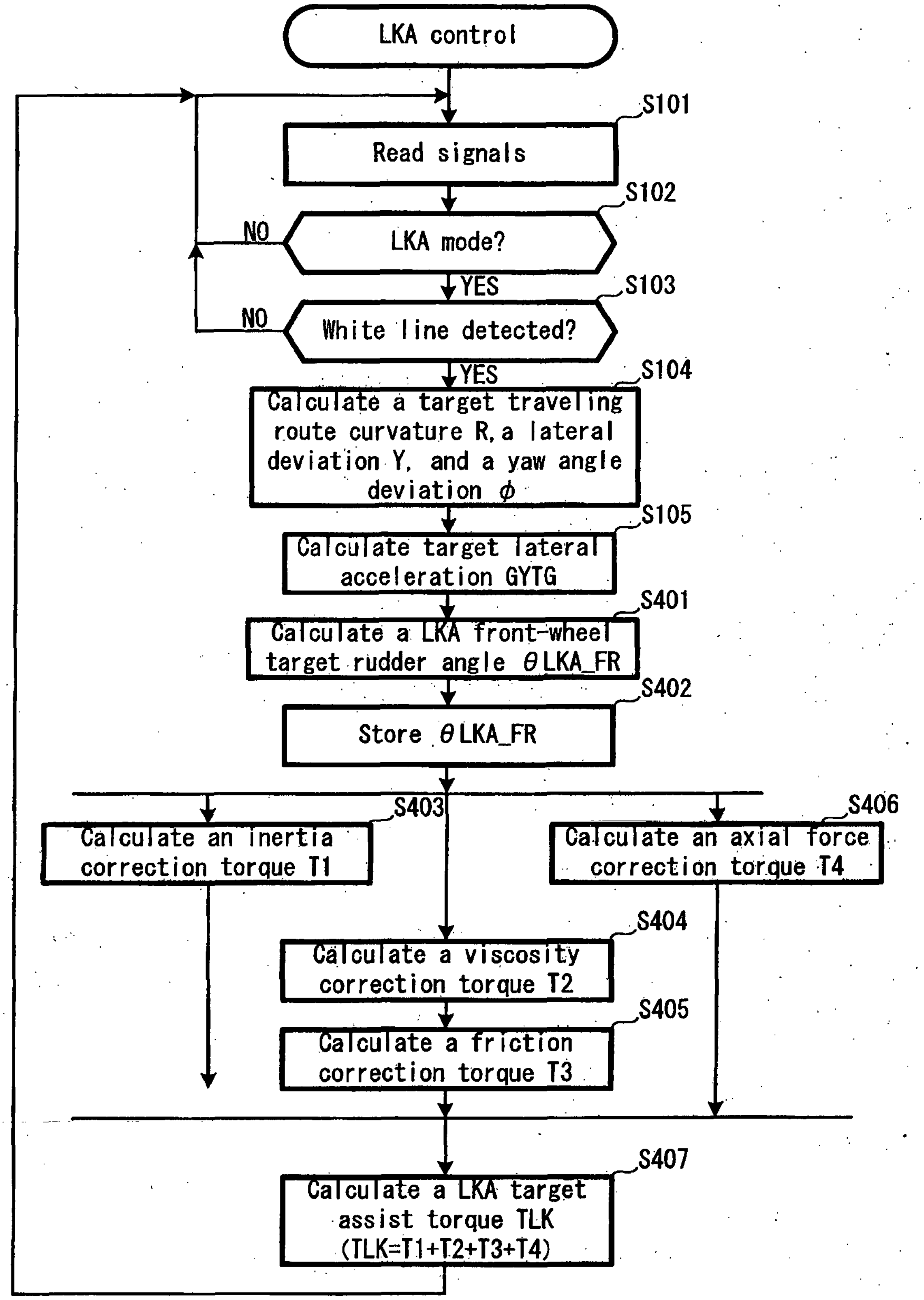
LKA control
S101
Read signals
S102
NO
LKA mode?
YES
S103
NO
White line detected?
YES
S104
Calculate a target traveling route curvature R, a lateral deviation Y, and a yaw angle deviation $\phi$
S105
Calculate target lateral acceleration GYTG
S401
Calculate a LKA front-wheel target rudder angle $\theta$LKA_FR
S402
Store $\theta$LKA_FR
S403
Calculate an inertia correction torque T1
S406
Calculate an axial force correction torque T4
S404
Calculate a viscosity correction torque T2
S405
Calculate a friction correction torque T3
S407
Calculate a LKA target assist torque TLK (TLK=T1+T2+T3+T4)

[FIG. 10]

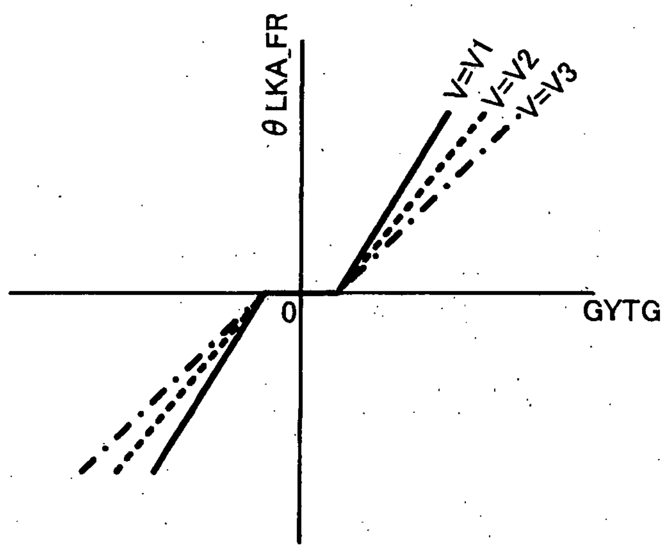
θ LKA_FR
V=V1
V=V2
V=V3
0
GYTG

[FIG. 11]

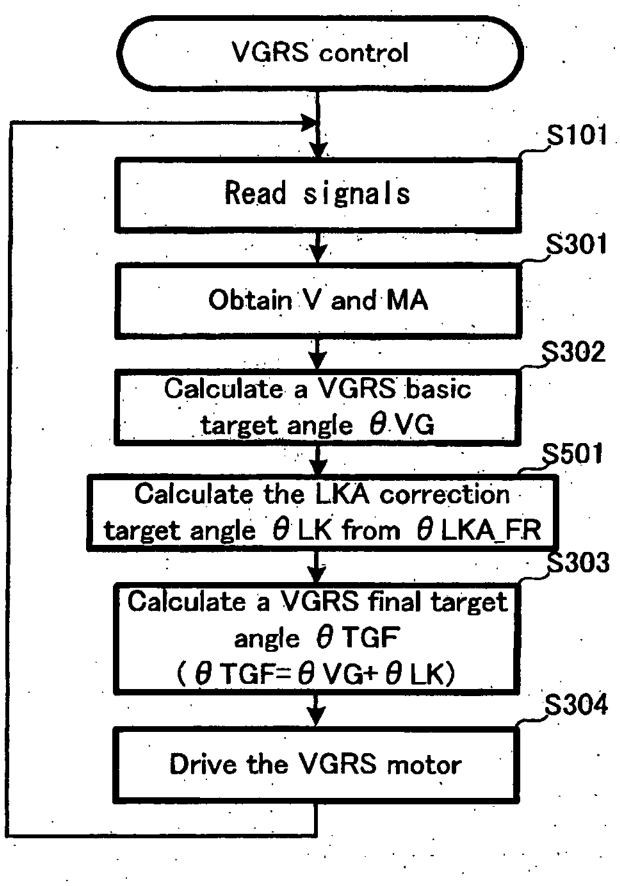
VGRS control
S101
Read signals
S301
Obtain V and MA
S302
Calculate a VGRS basic target angle θ VG
S501
Calculate the LKA correction target angle θ LK from θ LKA_FR
S303
Calculate a VGRS final target angle θ TGF (θ TGF= θ VG+ θ LK)
S304
Drive the VGRS motor

[FIG. 12]

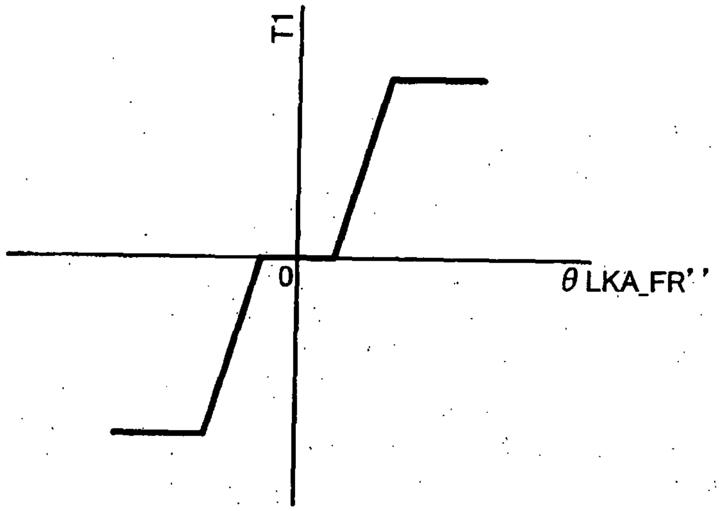


[FIG. 13]

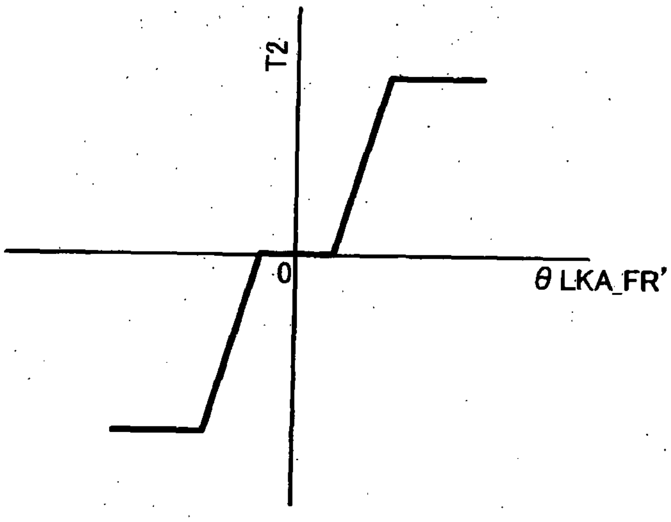

[FIG. 14]

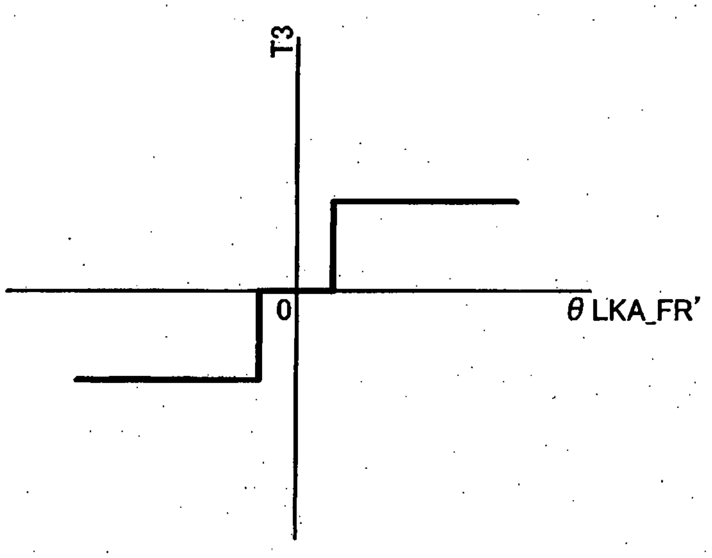


[FIG. 15]

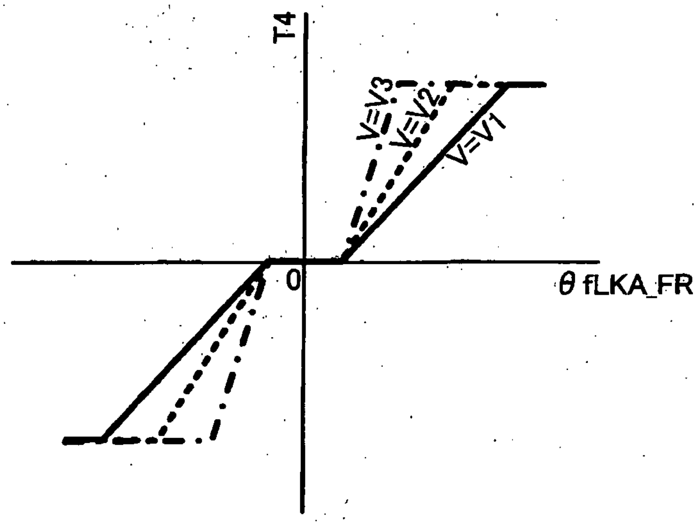

[FIG. 16]

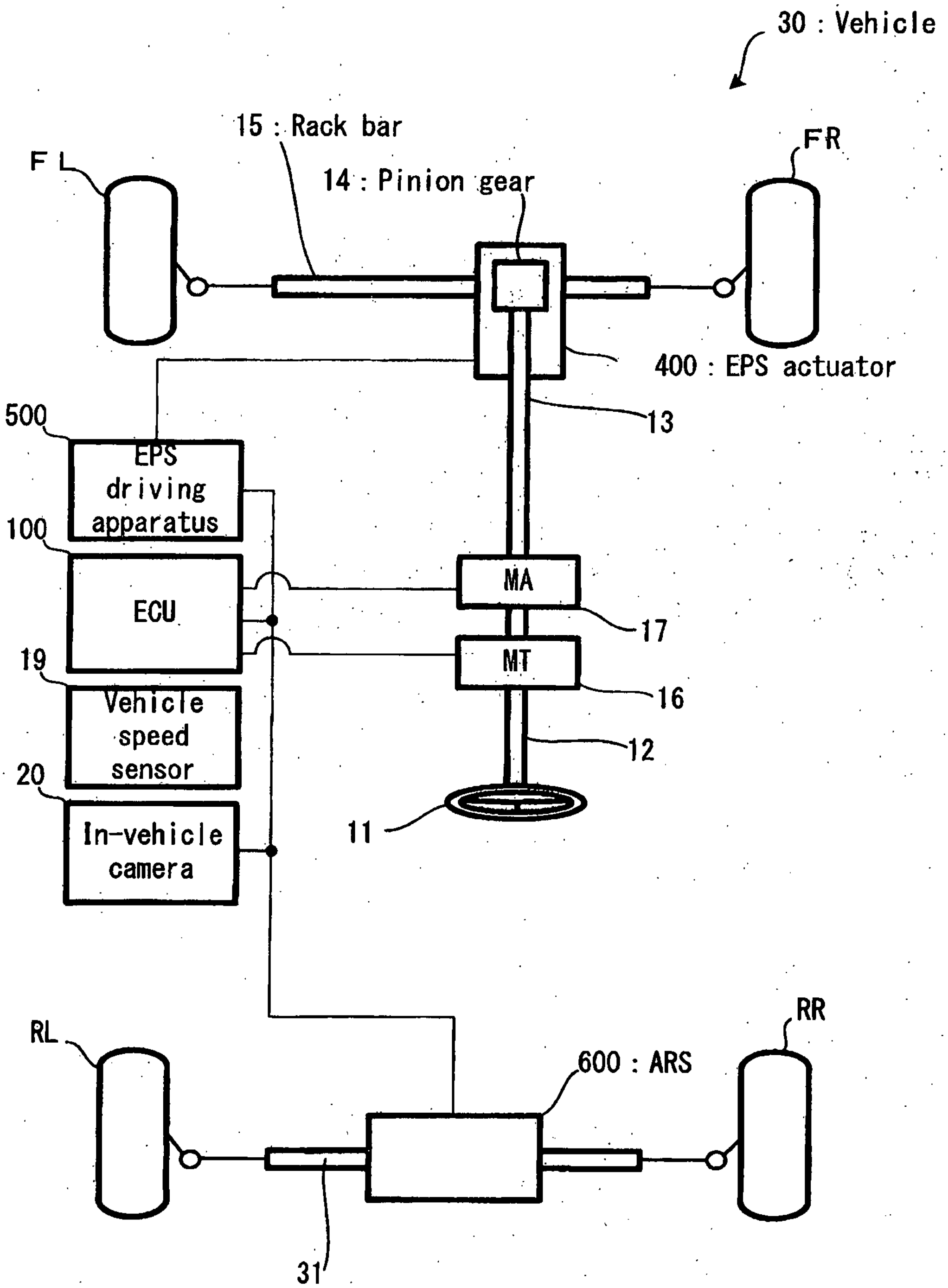
30 : Vehicle
15 : Rack bar
14 : Pinion gear
FL
FR
400 : EPS actuator
13
500
EPS driving apparatus
100
ECU
MA
17
MT
16
19
Vehicle speed sensor
12
20
In-vehicle camera
11
RL
RR
600 : ARS
31

[FIG. 17]

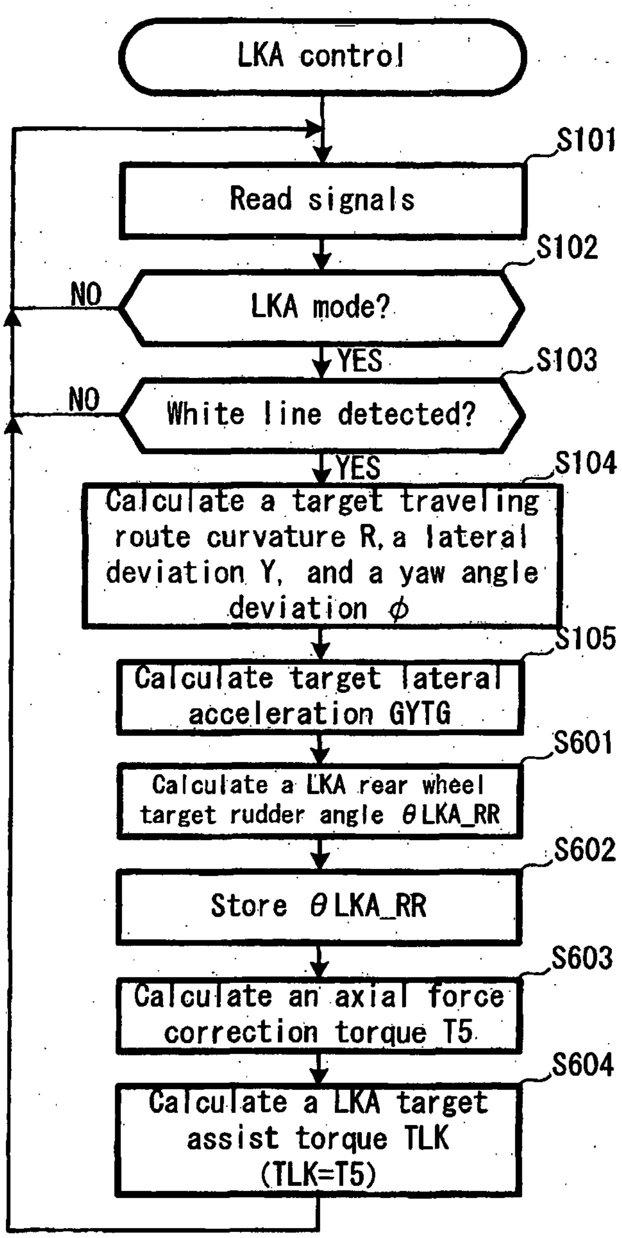
LKA control
S101
Read signals
S102
NO
LKA mode?
YES
S103
NO
White line detected?
YES
S104
Calculate a target traveling route curvature R, a lateral deviation Y, and a yaw angle deviation φ
S105
Calculate target lateral acceleration GYTG
S601
Calculate a LKA rear wheel target rudder angle θLKA_RR
S602
Store θLKA_RR
S603
Calculate an axial force correction torque T5
S604
Calculate a LKA target assist torque TLK (TLK=T5)

[FIG. 18]

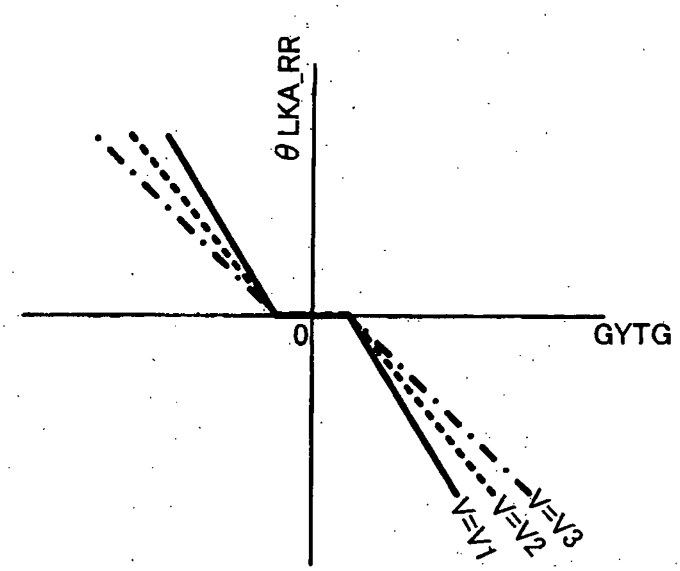


[FIG. 19]

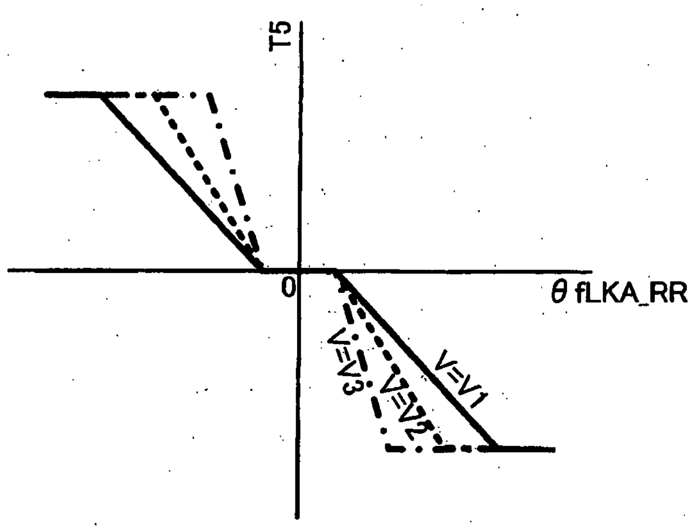

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007160998 A
- JP 2006143101 A
- JP 2008137612 A
- EP 1508500 A1